# EUROPÄISCHE PATENTANMELDUNG

(11) **EP 4 345 545 A1**
(43) Veröffentlichungstag der Anmeldung: **03.04.2024**
(21) Anmeldenummer: 23200424.2
(22) Anmeldetag: 28.09.2023
(51) Int. Cl.: G05B 15/02

(54) **VERFAHREN UND STEUERSYSTEM ZUM STEUERN EINER LANDWIRTSCHAFTLICHEN ANLAGE ZUR KLEINVIEH- UND/ODER MITTELVIEHHALTUNG**

(30) Priorität: 28.09.2022 LU 502847
(71) Anmelder: Big Dutchman International GmbH, 49377 Vechta (DE)
(72) Erfinder: Vorwerk, Hendrik, 49393 Lohne (DE); Meyer, Sören Christian, 27793 Wildeshausen (DE); Hunziker, Urs, 8706 Meilen (CH)
(74) Vertreter: Eisenführ Speiser

(57) **Zusammenfassung**

Die vorliegende Erfindung betrifft ein Verfahren zum Steuern einer landwirtschaftlichen Anlage zur Kleinvieh- und/oder Mittelviehhaltung, insbesondere zur Hühnerhaltung und/oder Schweinehaltung, umfassend die Schritte: Erfassen wenigstens eines ersten Sensorsignals einer ersten Sensoreinrichtung (100) der landwirtschaftlichen Anlage, wobei die erste Sensoreinrichtung zum Erfassen einer Prozessgröße und/oder Zustandsgröße in der landwirtschaftlichen Anlage eingerichtet ist; Erfassen einer Vielzahl von weiteren Sensorsignalen von örtlich in der landwirtschaftlichen Anlage und/oder von örtlich in einer anderen landwirtschaftlichen Anlage verteilten Sensoreinrichtungen (200), wobei die verteilten Sensoreinrichtungen zum Erfassen von Prozessgrößen und/oder Zustandsgrößen in der landwirtschaftlichen Anlage eingerichtet sind; Speichern der erfassten Sensorsignale als Clouddaten in einer Cloudcomputereinrichtung (300); Auswerten des ersten Sensorsignals mit einem Auswertungsmodul (410), wobei das Auswertungsmodul Teil einer Steuereinrichtung (400) der landwirtschaftlichen Anlage und/oder einer Cloudcomputereinrichtung ist und wobei das Auswerten ein Berücksichtigen wenigstens eines Teils der gespeicherten Clouddaten umfasst, um das erste Sensorsignal in Abhängigkeit von den gespeicherten Clouddaten zu verifizieren. Zudem betrifft die vorliegende Erfindung ein Steuersystem, ein Computerprogrammprodukt, ein computerlesbares Speichermedium, einen computerlesbaren Datenträger und ein Datenträgersignal.

## Beschreibung

Die vorliegende Erfindung betrifft ein Verfahren zum Steuern einer landwirtschaftlichen Anlage zur Kleinvieh- und/oder Mittelviehhaltung. Zudem betrifft die vorliegende Erfindung ein Steuersystem zum Steuern einer landwirtschaftlichen Anlage zur Kleinvieh- und/oder Mittelviehhaltung. Zudem betrifft die vorliegende Erfindung ein Computerprogrammprodukt, ein computerlesbares Speichermedium, einen computerlesbaren Datenträger und ein Datenträgersignal.

Stallsteuerungen zum Steuern einer landwirtschaftlichen Anlage zur Kleinvieh- und/oder Mittelviehhaltung sind grundsätzlich bekannt und in Betrieb. Landwirtschaftlichen Anlage zur Kleinvieh- und/oder Mittelviehhaltung unterscheiden sich von landwirtschaftlichen Anlage zur Großviehhaltung im Steuerungsaufwand und dem Anforderungsprofil, da in der Großviehhaltung mengenmäßig weniger Großvieh gehalten wird und das Großvieh eine höhere körperliche Robustheit (Physis) aufweist. Klein- und Mittelvieh ist im Gegensatz dazu anfälliger für Prozessschwankungen.

Zum Kleinvieh zählen dabei Nutztiere (Vieh) wie Kaninchen und Geflügel, z. B. Hühner, Puten oder Gänse, die zur landwirtschaftlichen Erzeugung von Produkten wie Eier oder als Schlachttiere dienen. Zum Mittelvieh zählen Nutztiere (Vieh) wie Schweine (Hausschweine), Ziegen oder Schafe, die zur landwirtschaftlichen Erzeugung von Produkten wie Milch, Wolle oder als Schlachttiere dienen. Abzugrenzen vom Klein- und Mittelvieh sind Rinder und Pferde, die dem Großvieh zuzuordnen sind. Unter den Begriff Klein- und/oder Mittelvieh werden also Nutztiere verstanden, welche bei der Schlachtung ein Lebendgewicht von unter 150 kg aufweisen. Unter diese Bezeichnung fallen insbesondere Schweine und Nutzgeflügel.

Es werden dabei bei Mast und Aufzucht des Klein- und Mittelvieh Anstrengungen unternommen mit dem Ziel der Effizienzsteigerung, wobei dabei die eingesetzten Ressourcen geschont und das Tierwohls gesteigert werden soll. Aufgrund der international immer enger werdenden Margen bei immer größerem Bewusstsein (und dadurch Berücksichtigung) des Tierwohls, kämpft die Entwicklung um Bruchteile von Prozenten, um bessere Ergebnisse im Zielbereich zu erreichen. Von besonderer Bedeutung im Klein- und Mittelviehbereich ist, dass beim Klein- und Mittelvieh bereits kleine Störungen des eingeregelten Betriebszustandes zu einer reduzierten Ausbeute führen, da das Klein- und Mittelvieh anfällig auf geänderte Prozess- oder Umgebungsbedingungen reagiert. Zum Beispiel verringert sich die Eierlegerate bei Hühnern deutlich in Abhängigkeit der Temperatur oder in Abhängigkeit des Tag-Nacht-Rhythmus, der mit künstlichem Licht gesteuert wird. Zusätzlich muss der Betriebszustand dynamisch auf übliche Veränderungen (andere Ressourcenanforderungen vom Alter der Tiere abhängig) als auch auf außergewöhnliche Störungen (Abdriften von Sensoren, Auftreten von Krankheiten, schwankende Umgebungstemperatur (Rekordsommer), usw., reagieren. Diese besondere Problematik betrifft vor allem die Tierzuchtsituationen mit Tieren, die einen Gewichtszuwachs pro Tag und Tier im Schnitt über 0,5 % des Lebendgewichtes zum Schlachtzeitpunkt haben, also Klein- und Mittelvieh.

Diese veränderlichen Faktoren wirken sich reduzierend auf die Gesamteffizienz der Tierzuchtanlage bei einer Langzeitbetrachtung aus, weil es bei einer zu späten Reaktion auf eine Störung bereits zu einer nicht korrigierbaren Veränderung kommt (z. B. eine Tierherde hat einen Tag lang zu wenig gefressen und dadurch den erwünschten Tagesgewichtszuwachs nicht erreicht). Automatisierte oder manuelle Regelungsanpassung zur Effizienzsteuerung der landwirtschaftlichen Anlage sind ebenfalls indikativ für eine verminderte Gesamteffizienz, da jede Regelanpassung auf einer Störung basiert, welche in der Zeit zwischen Abweichung von einer Sollgröße bis zum Wiedererreichen des Sollzustandes eine reduzierte Effizienz impliziert (Einregelungszeit eines Regelsystems). Zudem führen auch Reinigungspausen zu Ertragsverlust, da bei verschmutzter Technik die Regelung der Anlange teilweise abgeschaltet wird und die Tierzuchtanlage für diese Zeit suboptimal produziert. Außerdem können falsch erkannte Störungen, d. h. falsche Interpretation des Anlagenzustandes als Störsituation, im Sinne von Fehlalarmen, dazu führen, dass die Stallsteuerung vom idealen Betriebszustand wegregelt.

Beim precision farming werden Sensordaten erhoben, welche sich auf eine zunehmende Anzahl von Aktoren auswirken. Die sich daraus ergebenden Stellgrößen der Aktoren sind nicht mehr trivial aufgrund der Sensordaten einleuchtend. Zusätzlich erschwerend ist für den Klein- und/oder Mittelviehbereich die Problematik, dass bei kleineren Gewichten die Oberflächeneffekte gegenüber den Inhaltseffekten der Tiere dominant werden. Für die Tierzucht heißt dies, dass bei Tieren unter 150 kg die Interaktion mit dem Stallklima deutlich schneller und sensibler erfolgt, als bei größeren Tieren, weil die Wärmespeicherkapazität des Klein- und Mittelvieh schlichtweg tiefer ist als bei größeren Tieren. Dies bedeutet, dass dem erweiterten Stallklima gerade im Bereich des Klein- und/oder Mittelvieh eine besondere Bedeutung zukommt, wenn es darum geht, unter Berücksichtigung des Tierwohls eine Maximierung des Gewichtszuwachses pro kg Futter zu erreichen.

Aufgabe der vorliegenden Erfindung ist es deshalb, eines der oben genannten Probleme zu adressieren, den allgemeinen Stand der Technik zu verbessern oder eine Alternative zu bisher Bekanntem bereitzustellen. Insbesondere soll eine Lösung bereitgestellt werden mit der die Gesamteffizient (Ertrag) einer landwirtschaftlichen Anlage zur Kleinvieh- und/oder Mittelviehhaltung gesteigert werden kann. Insbesondere soll zudem eine Lösung bereitgestellt werden, mit der die landwirtschaftliche Anlage zur Kleinvieh- und/oder Mittelviehhaltung robuster gegen Störungen ist und Prozessschwankungen bei der Mast und Aufzucht des Klein- und Mittelvieh reduziert werden können.

Erfindungsgemäß wird zur Lösung der Aufgabe(n) ein Verfahren gemäß Anspruch 1 vorgeschlagen.

Demnach wird ein Verfahren zum Steuern einer landwirtschaftlichen Anlage zur Kleinvieh- und/oder Mittelviehhaltung vorgeschlagen. Es wird also ein Steuerverfahren vorgeschlagen, dass z. B. mit einem Steuersystem ausführbar ist, wie eine Stallsteuerung oder dergleichen. Als landwirtschaftliche Anlage wird zum Beispiel ein Mastbetrieb verstanden, also eine technische Anlage im Bereich der Tierproduktion, Viehwirtschaft oder Viehhaltung, in denen landwirtschaftliche Nutztiere zur Erzeugung von Nahrungsmitteln und Rohstoffen gehalten werden. In einer besonders bevorzugten Ausführungsform ist die landwirtschaftliche Anlage eine Anlage zur Hühnerhaltung und/oder Schweinehaltung bzw. zur Hühnermast und/oder Schweinemast, insbesondere um Eier und/oder Schlachtgut zu produzieren. Als Verfahren zum Steuern wird dabei sowohl ein Regeln, als auch ein Steuern im regelungstechnischen Sinne verstanden. Beim Steuern im regelungstechnischen Sinn wird mit Hilfe einer Stellgröße eine Maschine oder Anlage beeinflusst, insbesondere ohne, dass die Steuergröße auf die Stellgröße zurückwirkt. Regeln ist ein Vorgang, bei dem der IST-Wert einer Größe gemessen und durch Nachstellen dem SOLL-Wert angeglichen wird. Steuern im vorliegenden Kontext kann also generisch verstanden werden, im Sinne einer Veränderung des Zustands der landwirtschaftlichen Anlage mit technischen Mitteln bzw. Eingriffen.

Das Verfahren umfasst die nachfolgend beschriebenen Schritte:
Erfassen wenigstens eines ersten Sensorsignals einer ersten Sensoreinrichtung der landwirtschaftlichen Anlage, wobei die erste Sensoreinrichtung zum Erfassen einer Prozessgröße und/oder Zustandsgröße in der landwirtschaftlichen Anlage eingerichtet ist.

Ein Sensorsignal kann auch als Messsignal verstanden werden und die Sensoreinrichtung als Messeinrichtung. Das Sensorsignal kann ein analoges Signal, ein digitales Signal oder ein Datensignal sein, das gemessene Größen umfasst. Die landwirtschaftliche Anlage wird also sensorisch mit wenigstens einer Sensoreinrichtung überwacht, die auch als Sensor verstanden werden kann. Ein Sensor wird als ein Subsystem im Kontext der Tierzucht verstanden, welcher einen elektronischen Messwert liefert. Dieser Messwert kann auch ein komplexes Signal sein (z.B. analoges oder digitales Signal), das an einer anderen Stelle als bei der Messwertaufnahme weiterbearbeitet wird. Ein Sensorwert kann auch nur eine Schalterstellung eines Bedienschalters umfassen. Der Wortlaut wenigstens bringt zum Ausdruck, dass wenigstens eine Sensoreinrichtung vorgesehen ist, aber auch mehrere Sensorsignale erfasst werden können. Prozess- und Zustandsgrößen sind grundsätzlich bekannt. Prozessgrößen sind Größen, die einen Vorgang oder einen Prozess kennzeichnen, insbesondere Prozesse oder Vorgänge, die in der landwirtschaftlichen Anlage durchgeführt werden. Ein Beispiel für eine Prozessgröße ist z.B. eine in einem Anlagenteil der landwirtschaftlichen Anlage erzeugte Wärme, die in einem Verbrennungsprozess erzeugt wird oder ein Stromverbrauch oder dergleichen. Prozessgrößen beschreiben also Zustandsänderungen. Zustandsgrößen sind Größen, die einen Zustand kennzeichnen, insbesondere Zustände der landwirtschaftlichen Anlage. Ein Beispiel für eine Zustandsgröße ist eine gemessene Temperatur in der landwirtschaftlichen Anlage, eine gemessene Lichtstärke, ein Feuchtigkeitswert oder dergleichen. Zudem wird auch ein mit einem Kamerasystem erfasstes Bild als Zustandsgröße verstanden, da das Kamerabild einen aktuellen visuellen oder optischen Zustand der Anlage kennzeichnet. Erfassen kann generisch verstanden werden und beispielsweise ein Messen, ein Berechnen, ein Aufzeichnen oder ein Erheben von Messdaten oder dergleichen sein. Ein erstes Sensorsignal kann also beispielsweise ein Temperatursignal eines Temperatursensors sein, ein Feuchtigkeitssignal eines Feuchtigkeitssensors oder auch ein Bildsignal eines Kamerasystems, oder dergleichen.

Zudem umfasst das Verfahren den Schritt: Erfassen einer Vielzahl von weiteren Sensorsignalen von örtlich in der landwirtschaftlichen Anlage und/oder von örtlich in einer anderen landwirtschaftlichen Anlage verteilten Sensoreinrichtungen, wobei die verteilten Sensoreinrichtungen zum Erfassen von Prozessgrößen und/oder Zustandsgrößen in der landwirtschaftlichen Anlage eingerichtet sind.

Es wird also vorgeschlagen, eine Vielzahl von Sensoren in der landwirtschaftlichen Anlage zu überwachen, an der das Steuerverfahren angewendet wird. Zusätzlich oder alternativ wird vorgeschlagen, Sensorsignale örtlich in einer anderen landwirtschaftlichen Anlage zu erfassen, also in einer Anlage, an der das Steuerverfahren nicht unmittelbar angewendet wird. Die zuvor beschriebenen Erläuterungen zu den Sensorsignalen, Sensoreinrichtungen, Prozessgrößen, Zustandsgrößen und zum Erfassen gelten analog. Es versteht sich, dass die weiteren Sensorsignale andere Sensorsignale sind bzw. sein können, als das erste Sensorsignal, wobei dies meint, dass die Sensoren unterschiedlich sind. Die Vielzahl der weiteren Sensoren dienen als Vergleichsgrundlage, um das erste Sensorsignal in einem späteren Schritt zu verifizieren, also auf Richtigkeit zu prüfen. Die weiteren Sensorsignale werden kontinuierlich oder wenigstens in wiederholenden Zyklen erfasst und gespeichert. Neben der Variante, die zu steuernde landwirtschaftliche Anlage mit einer Vielzahl von Sensoren zu überwachen, wird auch vorgeschlagen, Sensorsignal einer anderen landwirtschaftlichen Anlage als Referenzgrößen für die Verifizierung des ersten Sensorsignals einzusetzen. Demnach können die weiteren Sensorsignale auch von örtlich verteilten Sensoren einer anderen landwirtschaftlichen Anlage stammen.

Zudem umfasst das Verfahren den Schritt: Speichern der erfassten Sensorsignale als Clouddaten in einer Cloudcomputereinrichtung.

Es wird also vorgeschlagen, dass das erste Sensorsignal und/oder die weiteren Sensorsignale als Clouddaten in einer Cloudcomputereinrichtung gespeichert werden. Es können also die weiteren Sensorsignale als Clouddaten gespeichert werden oder optional auch zusätzlich, das erste Sensorsignal. Als Clouddaten werden Daten verstanden, die extern in einem Cloudspeicher gespeichert werden. Clouddaten sind also Informationen, welche außerhalb der landwirtschaftlichen Anlage gespeichert sind und über eine Kommunikationsschnittstelle abgerufen werden können. Der Cloudspeicher kann beispielsweise ein Cloudspeichersystem mit einer Clouddatenbank sein oder als Clouddatenbanksystem verstanden werden. Die Clouddaten werden also für Cloudcomputing oder zum Aufbau einer Clouddatenbank bereitgestellt. Cloudcomputing bezeichnet die Bereitstellung von Computing-Services, einschließlich Servern, Speicher, Datenbanken, Netzwerken, Software, Analysen und Intelligenz, die auf oder in einer externen Anlage implementiert sind oder ausgeführt werden. Ein Beispiel für Cloudcomputing ist eine Softwareanwendung, die auf einem Cloudcomputer oder -server implementiert ist und die über eine Datenschnittstelle auf eine Clouddatenbank über eine Anfrage zugreift und als Antwort auf die Anfrage von der Clouddatenbank Clouddaten geliefert bekommt, und die empfangenen Clouddaten in der Softwareanwendung verarbeitet.

Das Sammeln der Daten aller Sensoren erlaubt eine Berücksichtigung der relevanten Messparameter, z.B. Stallbauart, Ort der Sensormontage, Sensortyp, Tierbelegung, usw., und die Generierung eines Kompensations-Offsets, der zum Beispiel zum Ausgleichen einer Abweichung eines Sensorsignales nutzbar ist. Dabei wird einerseits möglich, die Messwertungenauigkeit der ersten Sensoreinrichtung zu reduzieren und andererseits wird möglich, eine qualitative Aussage über die Zuverlässigkeit der ersten Sensoreinreichung anhand der Clouddaten zu bestimmen. Die Clouddaten können also bei einer Entscheidungsfindung in einer Steuerung mitberücksichtigt werden.

Es wird vorzugsweise vorgeschlagen, dass in der Cloudcomputereinrichtung auch zusätzliche Daten gespeichert sein können, die nicht von einer Sensoreinrichtung erfasst wurden. Beispiele sind zusätzliche Daten Stalldaten, Positionsdaten von Sensoren, Tierdaten, Futterdaten, Profildaten oder dergleichen.

Zudem umfasst das Verfahren den Schritt: Auswerten des ersten Sensorsignals mit einem Auswertungsmodul, wobei das Auswertungsmodul Teil einer Steuereinrichtung der landwirtschaftlichen Anlage ist und wobei das Auswerten ein Berücksichtigen wenigstens eines Teils der gespeicherten Clouddaten umfasst, um das erste Sensorsignal in Abhängigkeit von den gespeicherten Clouddaten zu verifizieren.

Es wird also vorgeschlagen, dass erste Sensorsignal anhand der gespeicherten Clouddaten zu verifizieren, d. h. das erste Sensorsignal anhand der Messdaten der weiteren Sensorsignale der verteilten Sensoreinrichtungen zu verifizieren, die als Clouddaten gespeichert sind. Das Auswerten des ersten Sensorsignals erfolgt dabei mit einem Auswertungsmodul. Das Auswertungsmodul ist beispielsweise ein Softwaremodul und/oder ein Hardwaremodul. Das Auswertungsmodul ist in einer Steuereinrichtung der landwirtschaftlichen Anlage implementiert. Die Steuereinrichtung kann dabei auch als Anlagensteuerung verstanden werden, und beispielsweise mit einem Prozesscomputer oder dergleichen ausgebildet sein. Das Auswertungsmodul ist dazu eingerichtet, das erste Sensorsignal zu empfangen, also von der ersten Sensoreinrichtung, und dieses Sensorsignal dann in Abhängigkeit von den gespeicherten Clouddaten zu verifizieren. Verifizieren bedeutet dabei, die Richtigkeit festzustellen. Verifizieren kann auch als Prüfen, Auswerten, Testen oder Bewerten verstanden werden. Es wird also vorgeschlagen, die Richtigkeit des ersten Sensorsignals anhand der gespeicherten Clouddaten mit dem Auswertungsmodul zu prüfen bzw. zu bewerten. In dem Auswertungsmodul können dazu Auswertungsregeln implementiert sein oder es kann ein Algorithmus in dem Auswertungsmodul implementiert sein, der dazu eingerichtet ist, das erste Sensorsignal in Abhängigkeit der gespeicherten Clouddaten zu prüfen.

Zusätzlich oder alternativ wird vorschlagen, dass das Auswertungsmodul Teil einer Cloudcomputereinrichtung ist, d. h. das Auswertungsmodul ist auf einer externen Berechnungseinheit implementiert, wie einem Cloudserver oder dergleichen.

Es versteht sich, dass die Steuereinrichtung über eine Schnittstelle dazu eingerichtet ist, die Clouddaten zu empfangen. Dazu kann die Steuereinrichtung beispielsweise über die Schnittstelle eine Anfrage an eine Clouddatenbank stellen, welche daraufhin als Antwort auf die Anfrage über die Schnittstelle das angefragte Clouddatenelement zurückgibt. Ist das Auswertungsmodul Teil einer Cloudcomputereinrichtung, ist die Cloudcomputereinrichtung ebenfalls über eine Schnittstelle dazu eingerichtet, die Clouddaten zu empfangen, beispielsweise wie zuvor zur Steuereinrichtung beschrieben, über eine Anfrage und eine Datenschnittstelle.

Es wurde erkannt, dass einzelne Messsignale für sich gesehen fehlerbehaftet sein können, wenn zum Beispiel ein Sensor falsch eingestellt ist, oder einen Defekt oder eine kontinuierliche Messabweichung aufweist. Es wird deshalb vorgeschlagen, dass das erste Sensorsignal anhand der gespeicherten Clouddaten verifiziert wird. Durch die automatisierte Verifizierung mit Clouddaten können falsche Regeleingriffe oder fehlerbehaftete Sensorsignal vermieden werden, womit die Gesamteffizienz der landwirtschaftlichen Anlage steigt.

Ein Regeleingriff ist ganz generell eine Veränderung eines Zustands der landwirtschaftlichen Anlage durch Ansteuerung eines Stellmittels der Anlage. Das Stellmittel kann auch als Aktuator verstanden werden.

Beispielsweise kann das erste Sensorsignal ein Kamerasignal sein, das mit gespeicherten Temperaturdaten oder anderen Bilddaten anderer Kameras verifiziert wird. In einem konkreten Beispiel kann mit einem Kamerasystem als erste Sensoreinrichtung optisch und automatisiert mittels Objekterkennung erkannt werden, dass das Vieh zittert. Die Ursache für das Zittern könnte Kälte oder Angst sein, wenn das Vieh ein lautes Geräusch gehört hat und sich fürchtet, beispielsweise bei einem Gewitter. Anhand der zusätzlichen Berücksichtigung der gespeicherten Daten kann das Kamerasignal, d.h. das erste Sensorsignal, mit den Clouddaten verifiziert werden, indem beispielsweise Temperaturdaten der Anlage geprüft werden. Das Auswertungsmodul verifiziert so das Kamerasignal in Abhängigkeit der gespeicherten Temperaturdaten und schließt darauf, dass ein Kältezittern vorliegt, wenn die Temperatur zu niedrig ist. Daran anschließend kann ein Regeleingriff erfolgen und die Temperatur erhöht werden. Im Falle eines Angstzitterns könnte kein Regeleingriff erfolgen oder beruhigende akustische Signale erzeugt werden.

Ein zweites Beispiel ist, dass das erste Sensorsignal ein Temperatursignal mit einer schlechten Auflösung ist, z.B. mit einer Auflösung von +-1° Celcius. Diese ungenaue Auflösung kann zusätzlich durch temperaturverzerrende Luftströmungen im Stall dazu führen, dass das erste Sensorsignal mit der schlechten Auflösung eine Abweichung vom wahren Temperaturwert im Stall von bis zu 2-3° Celcius aufweisen kann. Die Temperatursensoren werden in der Regel im Decken-, Boden- oder Wandbereich angebracht, so dass diese im Vergleich zum Zentrum des Raumes eine andere Temperatur anzeigen. Es wird nun vorgeschlagen, dass erste Sensorsignal, also das Temperatursignal anhand von Lüfterdaten oder anhand von anderen Temperatursensoren zu verifizieren. Weicht der Temperatursensor zum Beispiel zu weit von einem Mittelwert der anderen Sensoren ab, dann kann von einem defekten Sensor ausgegangen werden.

Die vorliegende Erfindung macht sich also die Erkenntnis zunutze, dass Sensorsignale trotz richtiger Messergebnisse nicht eindeutig sind oder fehlerbehaftet sein können und Referenz bzw. Vergleichsdaten beliebiger Art dazu eingesetzt werden können die Sensorsignale zu prüfen. Beispiele hierfür sind wie zuvor bereits angedeutet, ein Kamerasystem mit einer automatisierten Objekterkennung, das eine falsche Interpretation des Kamerabildes ausgibt, oder ein ungenauer oder defekter Temperatursensor, der einen falschen Wert ausgibt.

Zusätzlich wurde herausgefunden, dass das erste Sensorsignal, wenn es unrichtig ist, dynamisch anhand der Clouddaten kompensiert werden kann. Es kann bespielweise aus dem ersten Sensorsignal und den Clouddaten ein neuer Wert für die erste Sensoreinrichtung bestimmt werden. Damit wird auch die Zuverlässigkeit und Robustheit der Stallsteuerung erhöht.

Es wird eine Lösung bereitgestellt, mit der in vorteilhafterweise falsche Regeleingriffe durch falsche Sensorsignale verhindert werden, indem auf den ersten Blick richtig erscheinende Sensorsignale anhand von Zusatzdaten verifiziert werden, die in einem Cloudspeicher hinterlegt sind.

Das erste Sensorsignal kann deshalb auch als unsicheres Signal aufgefasst und bezeichnet werden. Beispiele für solche unsicheren Signale sind z. B. Kamerasignale und dessen Interpretation für das Tierverhalten oder Sensorsignale, die einen unerkannten Wertedrift aufweisen und beispielsweise aus einer Gruppe von Sensoren stammen. Beispielsweise kann ein Sensor aus einer Sensorgruppe eine größere Abweichung zu einem Mittelwert haben und dieser Wertedrift fällt erst durch das Verifizieren des Temperatursensors anhand der Clouddaten auf, die Daten anderer Temperatursensoren umfassen. Ein weiteres Beispiel für ein unsicheres Signal ist auch ein ausgefallenes Sensorsignal. Es kann beispielsweise vorkommen, dass ein Sensor vollständig ausfällt und normalerweise aufgrund des Sensorausfalls ein Eingriff durch die Stallsteuerung erfolgt. Das ausgefallene Sensorsignal kann dann aber basierend auf den Clouddaten verifiziert werden und festgestellt werden, dass der Sensor zwar ausgefallen ist, es aber aufgrund der anderen Sensordaten keinen Anlass für einen Regeleingriff gibt. Es kann also anhand der alternativen Sensoren, welche beispielsweise nicht zur gleichen Sensorklasse gehören, ein Ersatzwert bestimmt oder errechnet werden, der für essenzielle Steuerungen verwendet wird. Zudem können als unsichere Signale auch widersprüchliche Sensorsignale aufgefasst werden. Zum Beispiel kann es vorkommen, dass die Steuereinrichtung eine zu hohe Feuchtigkeit feststellt und daraufhin die Luftaustauschrate in der Anlage durch Ansteuerung von Lüftern erhöht. Der Anlagenbetreiber könnte gleichzeitig einen Temperaturabfall feststellen und händisch den Lüfter ausschalten, der kalte Luft einbläst. Es kommt so zu einem Steuerkonflikt. Durch das Verifizieren des ersten Signals mit den Clouddaten kann dieser Konflikt gelöst werden und eine widersprüchliches Signal verifiziert und priorisiert werden. Ein weiteres Beispiel für ein unsicheres Sensorsignal ist, dass Sensoren Genauigkeitstoleranzen unterliegen. Innerhalb der inhärenten Genauigkeit eines Sensors kann dieser zwar unter Umständen ausreichend genau für einen richtigen Regeleingriff sein. Anhand der Verifikation mit den Clouddaten können aber noch andere Temperatursensoren oder andere Daten zur Erhöhung der Genauigkeit berücksichtigt werden. Damit ist die Regelung genauer und damit wird ebenfalls die Gesamteffizienz der Anlage erhöht. Als unsicheres Signal werden also schwache, unsichere, ungenaue, unregelmäßige oder unzuverlässige Daten, die einen Istzustand der landwirtschaftlichen Anlage beschreiben, oder Veränderungen, insbesondere erste Ableitung davon, also Delta pro T, oder Tendenzen, also insbesondere Datenprojektionen davon in die Zukunft, welche aufgrund der tiefen Datenqualität, die als Unsicherheit verstanden werden kann, nicht direkt als Triggerwert für eine Steuerung verwendet werden können. Für einen Großteil der in einem Stallumfeld verwendeten Sensoren existiert die Problematik von Störsignalüberlagerung oder Drift oder Biasing, z.B. elektrisches Biasing.

Es wurde also erkannt, dass solche unsicheren Sensorsignale durch Fremddaten aus einer spezifischen Cloud in Ihrer Qualität (Aussagekraft) verbessert werden können. Dadurch, dass die Werte vieler Sensoren in einem übergeordneten Cloudsystem gespeichert werden, stehen diese sowohl für eine lokale Analyse, vorzugsweise mittels Datenvorratshaltung, der in Frage kommenden Teildaten auf einem lokalen System für die Abdeckung der Verbindung zu einer Cloud, als auch im Onlinebetrieb direkt zur Verfügung, vorzugsweise unter Mechanismen des Cloud-Computing.

Es wird also ein geschlossenes Steuersystem vorgeschlagen, welches sich am Tierwohl oder am Zuchtziel des Klein- und/oder Mittelvieh orientiert und im Regeladaptionsbereich von kleinen Werten unter der Zuhilfenahme von Clouddaten optimiert.

Es wird also vorgeschlagen, das erste Sensorsignal, das ein unsicheres oder fehlerbehaftetes Signal sein kann, mittels Clouddaten zu bewerten und dessen Aussagekraft festzustellen. Die Auswertung kann beispielsweise mittels Algorithmen wie Cloudcomputing oder Bigdataanalyse oder maschinellen Lernverfahren erfolgen. So wird das erste Sensorsignal verbessert, qualifiziert oder quantifiziert. Darauf basierend kann dann eine automatische Aktion eingeleitet werden, zum Beispiels ein Steuersignal, eine Warnung oder ein Vorschlag erzeugt werden.

Die erfindungsgemäße Lösung sammelt also die Daten aller Sensoren und erlaubt so die Berücksichtigung relevanter Messparameter, wie zum Beispiel die Stallbauart, Ort der Sensormontage, Sensortyp, Tierbelegung, usw., die Generierung eines Kompensations-Offsets, der die zu berücksichtigende Abweichung des Messwerts wieder ausgleicht. So kann eine Messwertungenauigkeit des Sensors reduziert werden und andererseits eine qualitative Aussage über die Zuverlässigkeit des Sensorwertes bestimmt werden. Dies kann bei einer Entscheidungsfindung der Steuerung mitberücksichtigt werden.

Vorzugsweise wird das erste Sensorsignal durch eine periodische und/oder durch eine Echtzeitüberprüfung anhand der Clouddaten angepasst. In anderen Worten wird dauernd ein Kompensations-Offset auf Basis der Daten in der Cloud berechnet. Es wird also ein dynamisches adaptives Biasing vorgeschlagen. So kann beispielsweise eine schlecht aufgelöste Sensoreinrichtung mit einem neuen Wert überschrieben werden und der neue Wert anschließend in der Regelung berücksichtigt werden.

Vorzugsweise umfasst das Verfahren den zusätzlichen Schritt: Erzeugen eines oder mehrere verifizierter Steuersignale zum Ansteuern wenigstens eines Stellmittels der landwirtschaftlichen Anlage, wobei das verifizierte Steuersignal ein Steuersignal ist, das auf Basis der kombinierten Auswertung des ersten Sensorsignals und der Clouddaten erzeugt wird.

Es wird also vorgeschlagen, dass ein automatisierter Eingriff in die landwirtschaftliche Anlage mit der Steuereinrichtung erfolgt, nämlich auf Basis der Auswertung bzw. Prüfung des ersten Sensorsignals in Abhängigkeit der Clouddaten. Es wird ein verifiziertes Steuersignal erzeugt, das auch als Ansteuersignal oder Steuerbefehl verstanden werden kann. Das Steuersignal wird einem Stellmittel der landwirtschaftlichen Anlage als Steuersignal vorgeben. Das Steuersignal ist verifiziert, d.h. es wird auf Basis der Auswertung des ersten Sensorsignals in Abhängigkeit der Clouddaten erzeugt. Das verifizierte Steuersignal wird vorzugsweise erzeugt, wenn die vorherige Auswertung ergeben hat, dass das erste Sensorsignal ein verifiziertes Sensorsignal ist, d.h. das erste Sensorsignal als ausreichend richtig oder vertrauenswürdig durch die Auswertung eingestuft wurde. Das Stellmittel kann auch als Aktuator aufgefasst werden. Beispiele für Stellmittel sind Pumpen, Lampen, Lüfter, Motoren, Türöffner oder dergleichen.

Weiter bevorzugt sind die Steuersignale Teil einer Regelung der landwirtschaftlichen Anlage. Es wird also vorgeschlagen, dass Steuersignale als Stellgrößen einer Regelung erzeugt werden. Die Steuereinrichtung stellt demnach im regelungstechnischen Sinne den Regler dar, dem eine Sollgröße vorgeben wird und diese Sollgröße wird mit den erfassten Sensorsignalen und/oder Clouddaten verglichen, die die Regelrückführung darstellen. Die landwirtschaftliche Anlage stellt die Regelstrecke dar.

Weiter bevorzugt sind die Steuersignale priorisiert ausgebildet und weisen unterschiedlich konfigurierbare Prioritäten auf. Es wird also vorgeschlagen, den mehreren Steuersignalen eine Priorität zuzuweisen. Diese Priorität ist vorzugsweise konfigurierbar, d.h. einstellbar. Die Priorität dient dem Zweck, bei gleichzeitigem Vorliegen mehrerer Steuersignale eine Eindeutigkeit in der Regelung zu erzielen. Es wird dann das Steuersignal priorisiert und ausgeführt, dass die höchste Priorität aufweist.

Vorzugsweise umfasst das Verfahren den zusätzlichen Schritt: Erzeugen eines oder mehrerer verifizierter Warnsignale zum Anzeigen einer Warnung und/oder zum Anzeigen einer Störung der landwirtschaftlichen Anlage, wobei das verifizierte Warnsignal ein Warnsignal ist, das auf Basis der kombinierten Auswertung des ersten Sensorsignals und der Clouddaten erzeugt wird.

Es wird also vorgeschlagen, dass eine automatisierte Warnung in die landwirtschaftliche Anlage erfolgt, nämlich auf Basis der Auswertung bzw. Prüfung des ersten Sensorsignals in Abhängigkeit der Clouddaten. Es wird ein verifiziertes Warnsignal erzeugt, das auch als Warnung oder Warnmeldung verstanden werden kann. Das Warnsignal ist zum Anzeigen einer Warnung und/oder zum Anzeigen einer Störung der landwirtschaftlichen Anlage vorgesehen und eingerichtet. Das Warnsignal wird beispielsweise einem Warnmittel der landwirtschaftlichen Anlage vorgeben, wie einer Sirene, einer Warnanzeige oder dergleichen. Das Warnsignal ist verifiziert, d.h. es wird auf Basis der Auswertung des ersten Sensorsignals in Abhängigkeit der Clouddaten erzeugt. Das verifizierte Warnsignal wird vorzugsweise erzeugt, wenn die vorherige Auswertung ergeben hat, dass das erste Sensorsignal kein verifiziertes Sensorsignal ist, d.h. das erste Sensorsignal als nicht richtig oder nicht vertrauenswürdig durch die Auswertung eingestuft wurde.

Vorzugsweise umfasst das Verfahren den zusätzlichen Schritt: Erzeugen eines oder mehrerer verifizierter Vorschläge für optimierte Betriebsparameter oder Betriebseinstellungen der landwirtschaftlichen Anlage, wobei der verifizierte Vorschlag ein Vorschlag ist, der auf Basis der kombinierten Auswertung des ersten Sensorsignals und der Clouddaten erzeugt wird.

Es wird also vorgeschlagen, dass ein automatisierter Vorschlag für optimierte Betriebsparameter oder Betriebseinstellungen der landwirtschaftlichen Anlage erzeugt wird, nämlich auf Basis der Auswertung bzw. Prüfung des ersten Sensorsignals in Abhängigkeit der Clouddaten. Es wird ein verifizierter Vorschlag erzeugt, der auch als automatisierter Expertenvorschlag verstanden werden kann, wie aus Expertensystemen bekannt. Der Vorschlag wird beispielsweise mit bzw. an einer Anzeigeeinrichtung angezeigt, beispielsweise auf einem Computerterminal, auf einem Endgerät oder auf einer sonstigen Anzeige. Der Vorschlag ist verifiziert, d.h. er wird auf Basis der Auswertung des ersten Sensorsignals in Abhängigkeit der Clouddaten erzeugt. Der verifizierte Vorschlag wird vorzugsweise erzeugt, wenn die vorherige Auswertung ergeben hat, dass das erste Sensorsignal kein verifiziertes Sensorsignal ist, d.h. das erste Sensorsignal als nicht ausreichend richtig oder nicht vertrauenswürdig durch die Auswertung eingestuft wurde.

Vorzugsweise umfasst das Verfahren zusätzlich oder alternativ den Schritt: Ausführen wenigstens einer Maßnahme nach Detektion einer Abweichung zwischen dem ersten Sensorsignal und den gespeicherten Clouddaten aus der Liste von Maßnahmen aufweisend: Bereitstellen eines Auszugs des ersten Sensorsignals und aufgezeichneter Clouddaten; Anzeigen eines Veränderungsvorschlags für Betriebsparameter oder für Betriebseinstellungen der landwirtschaftlichen Anlage; und/oder Anzeigen eines Vorschlags für eine Ansteuerung eines Stellmittels der landwirtschaftlichen Anlage.

Es wird also vorgeschlagen, dass das erste Sensorsignal und aufgezeichnete Clouddaten bereitgestellt werden, zum Beispiel elektronisch auf einem Endgerät angezeigt werden oder analog als Ausdruck bereitgestellt werden, z.B. in Form einer Liste. Ein Anlagenbetreiber oder-operator kann die bereitgestellten Daten kontrollieren und das Sensorsignal und die Clouddaten manuell bewerten und Regeleingriffe manuell vornehmen. Zudem kann eine weitere Maßnahme sein, Veränderungsvorschläge für Betriebsparameter oder für Betriebseinstellungen der landwirtschaftlichen Anlage anzuzeigen, vorzugsweise an einem Endgerät oder direkt an einem Steuerterminal der landwirtschaftlichen Anlage. So kann der Anlagenbetreiber oder -operator die vorgeschlagenen Parameter oder Einstellungen kontrollieren und die Vorschläge annehmen oder ablehnen. Eine weitere Maßnahme ist einen Vorschlag für eine Ansteuerung eines Stellmittels der landwirtschaftlichen Anlage anzuzeigen. Es kann also beispielsweise auf Basis des Sensorsignals und der Clouddaten vorgeschlagen werden, eine Stellmittel zu aktivieren, das der Anlagenbetreiber oder -operator noch nicht aktiviert hat oder das in Gesamtschau aller Daten zu einer gesteigerten Effizienz führt. Ein Beispiel ist, den Vorschlag anzuzeigen, die Temperatur vorsorglich zu erhöhen, wenn mit einem Temperatursensor in einer anderen landwirtschaftlichen Anlage ein Kälteabfall detektiert wurde.

In einer besonders bevorzugten Ausführungsform wird eine Maßnahme der vorgenannten Maßnahmen in Abhängigkeit eines bestimmten Maßes der detektierten Abweichung ausgeführt.

Es wird also vorgeschlagen, dass die Abweichung zwischen dem ersten Sensorsignal und den Clouddaten quantitativ bestimmt wird und ein Wert für die Abweichung durch Auswertung bestimmt wird. Die Auswertung erfolgt vorzugsweise mit dem Auswertungsmodul. Das Maß der Abweichung kann dabei anhand von typgleichen Sensorsignalen erfolgen, oder auch ungleichen Sensorsignalen oder Clouddaten.

Vorzugsweise erfolgt vor dem Speichern der Clouddaten in der Cloudcomputereinrichtung und/oder der landwirtschaftlichen Anlage wenigstens einer der nachfolgenden Schritte: Empfangen der erfassten Sensorsignale als Rohdaten mit einem Konzentrationsmodul; Aufbereiten der Rohdaten mit dem Konzentrationsmodul und Speichern der aufbereiteten Rohdaten als Clouddaten.

Vorzugsweise umfasst das Aufbereiten der Rohdaten ein Anonymisieren der Clouddaten, ein Komprimieren, ein Verschlüsseln und/oder ein Kategorisieren der Rohdaten.

Es wird also vorgeschlagen, die Rohdaten mittels einer Vorverarbeitung anzupassen und zu konzentrieren. Damit wird erreicht, dass die Daten aufbereitet vorliegen und keine unnötigen Daten gespeichert werden. Der Auswertungsprozess der Clouddaten kann dadurch beschleunigt werden, womit der Auswertungsschritt beschleunigt wird. Zudem werden in landwirtschaftlichen Anlagen zur Kleinvieh- und/oder Mittelviehhaltung große Menge an Daten produziert. Aufgrund der begrenzten Speicherkapazitäten der Clouddatenbank führt eine Aufbereitung und Konzentration der Rohdaten dazu, dass mehr relevante Informationen als Clouddaten gespeichert werden können. Damit liegen mehr Vergleichsdaten zum Verifizieren des erstens Sensorsignals vor und eine genauere Verifizierung wird bereitgestellt. Die Clouddaten im Rahmen der Cloudspeicherung werden anonymisiert, so dass zwar ein Ergebnis abgespeichert wird, aber kein Rückschluss auf den Erzeuger möglich ist. Diese Anonymisierung kann auch erst beim Datenbezug eines Dritten erfolgen. Dadurch bleiben die dem jeweiligen Farmer gehörenden Einzeldaten vor unerwünschtem fremden Zugriff geschützt.

Vorzugsweise ist die erfasste Prozessgröße und/oder Zustandsgröße der ersten Sensoreinrichtung und/oder sind die erfassten Prozess- und/oder Zustandsgrößen der verteilten Sensoreinrichtungen Größen zur Kennzeichnung eines Stallklimas in der landwirtschaftlichen Anlage.

Bevorzugt sind die Prozess- und/oder Zustandsgrößen Größen aus der Liste aufweisend:
- eine Prozess- und/oder Zustandsgröße zur Kennzeichnung einer Schadgaskonzentration (CO, CO2, H2S, NH3),
- eine Prozess- und/oder Zustandsgröße zur Kennzeichnung einer Helligkeit (insbesondere deren Wert im Tagesgang),
- eine Prozess- und/oder Zustandsgröße zur Kennzeichnung einer Lichtzusammensetzung,
- eine Prozess- und/oder Zustandsgröße zur Kennzeichnung einer Frischluftmenge,
- eine Prozess- und/oder Zustandsgröße zur Kennzeichnung einer Luftbewegung,
- eine Prozess- und/oder Zustandsgröße zur Kennzeichnung einer Staubkonzentration,
- eine Prozess- und/oder Zustandsgröße zur Kennzeichnung einer Temperatur, und
- eine Prozess- und/oder Zustandsgröße zur Kennzeichnung einer Feuchtigkeit,
- eine Prozess- und/oder Zustandsgröße zur Kennzeichnung eines Geräuschpegels.

Weiter bevorzugt werden die Größen zur Kennzeichnung des Stallklimas mit wenigstens einem Stallklimasensor erfasst.

In einer besonders bevorzugten Ausführungsform ist ein Stallklimasensor ein Gassensor, ein Lichtsensor, ein Durchflusssensor, ein Staubsensor, ein Temperatursensor, ein Feuchtigkeitssensor und/oder ein Geräuschsensor oder dergleichen.

Es wird also vorgeschlagen, dass die erste Sensoreinrichtung und/oder die anderen örtlich verteilten Sensoreinrichtungen Sensoren sind, die das Stallklima in der landwirtschaftlichen Anlage kennzeichnen. Als Sensoren können Schadgassensoren, Helligkeitssensoren, Lichtzusammensetzungssensoren, Durchflusssensoren zur Bestimmung einer Frischluftzufuhr und/oder einer Luftbewegung, Staubsensoren, Temperatursensor oder Feuchtigkeitssensoren vorgesehen sein, oder dergleichen. Auch Geräusche werden dem Stallklima zugeordnet.

Vorzugsweise ist die erfasste Prozessgröße und/oder Zustandsgröße der ersten Sensoreinrichtung und/oder sind die erfassten Prozess- und/oder Zustandsgrößen der verteilten Sensoreinrichtungen Größen zur Kennzeichnung eines physiologischen und/oder ethologischen Mechanismus eines Nutztierverhaltens in der landwirtschaftlichen Anlage.

Es wird also vorgeschlagen, sensorisch die Physis und/oder das Verhalten des Klein- und Mittelviehs durch Datenerhebung zu überwachen. Physiologische Mechanismen betreffen dabei Mechanismen des Klein- und/oder Mittelvieh, die die Physis des Viehs betreffen, z.B. Zittern oder dergleichen. Ethologische Mechanismen betreffen Mechanismen des Klein- und/oder Mittelvieh, die das Verhalten des Viehs betreffen, also zum Beispiel eine Gruppenbildung oder Haufenbildung. Die Prozessgröße und/oder Zustandsgröße zur Kennzeichnung eines physiologischen und/oder ethologischen Mechanismus eines Nutztierverhaltens können auch synonym als tierbezogene Daten verstanden werden. Tierbezogene Daten umfassen dabei Angaben über wenigstens ein bestimmtes oder ein bestimmbares Klein- und/oder Mittelvieh. Diese Daten können sensorisch durch eine Messeinrichtung oder über eine Datenerfassung erhoben werden.

Vorzugsweise sind die Prozess- und/oder Zustandsgröße zur Kennzeichnung eines physiologischen und/oder ethologischen Mechanismus-Größen aus der Liste aufweisend:
- eine Prozess- und/oder Zustandsgrößen zur Kennzeichnung eines Suhlens der Nutztiere,
- eine Prozess- und/oder Zustandsgrößen zur Kennzeichnung einer Haufenlagerung der Nutztiere,
- eine Prozess- und/oder Zustandsgrößen zur Kennzeichnung einer Schattenlagerung der Nutztiere,
- eine Prozess- und/oder Zustandsgrößen zur Kennzeichnung eines Kältezitterns der Nutztiere,
- eine Prozess- und/oder Zustandsgrößen zur Kennzeichnung eines Hechelns der Nutztiere,
- eine Prozess- und/oder Zustandsgrößen zur Kennzeichnung der Menge der Futteraufnahme der Nutztiere, und
- eine Prozess- und/oder Zustandsgrößen zur Quantifizierung einer Gewichtsabschätzung der Nutztiere.

Weiter bevorzugt werden die Größen zur Kennzeichnung eines physiologischen und/oder ethologischen Mechanismus eines Nutztierverhaltens in der landwirtschaftlichen Anlage mit einem Kamerasystem erfasst, das mit einem Bilderkennungsalgorithmus dazu eingerichtet ist, einen physiologischen und/oder den ethologischen Mechanismus im Nutztierverhalten zu erkennen.

Es wird also vorgeschlagen, ein Kamerasystem in der landwirtschaftlichen Anlage einzusetzen, das mittels einem Bilderkennungsalgorithmus dazu eingerichtet ist, einen physiologischen und/oder ethologischen Mechanismus zu erkennen und diesen als Messwert auszudrücken. Der Bilderkennungsalgorithmus kann auch als Objekterkennung oder Bilderkennung aufgefasst werden. Der Bilderkennungsalgorithmus kann beispielsweise als Softwareprogramm in dem Kamerasystem oder in der Steuereinrichtung der landwirtschaftlichen Anlage oder in der Cloudcomputereinrichtung implementiert sein.

Diese physiologischen oder ethologischen Muster sind zum Teil schwierig bei Schweinen und Hühnern zu erkennen. Einerseits stellt bei Hühnern die extrem große Zahl der Tiere in einem Bereich mit ähnlichen Bedingungen rein aufgrund von statistischen Ausreißern ein häufiger Grund von Fehlinterpretationen dar. Diese Fehlinterpretationen kann durch entsprechende Vergleiche mit den Clouddaten reduziert werden. Andererseits führt bei Schweinen deren Intelligenz bzw. Lernfähigkeit zu Störungen: Durch zufällige Stimuli und deren Reaktionen im Stall haben Schweine (zufällig) gewisse ungewollte Eingriffe in Steuermechanismen erlernt und beeinflussen dadurch Abläufe. Auch diese nicht statistisch bedingten Ausreißer konnten mittels Clouddaten reduziert und das Steuersystem mit der Steuereinrichtung zu einer zuverlässigeren Arbeitsweise gebracht werden.

Zusätzlich wurde bei Hühnergehegen das Eindringen von Tauben entdeckt, welche das Bewegungsverhalten der Hühner imitieren, um keine Reaktionen unter den Hühnern auszulösen und so in Ruhe futtern zu können. Gerade in solchen Situationen nützt der zusätzlich Abgleich der Bilddaten mit den Clouddaten. Tauben werden so besser erkannt und Gegenmaßnahmen können eingeleitet werden.

Besonders bevorzugt wird ein Bewegungsprofil der einzelnen Nutztiere aufgezeichnet und ausgewertet, um den physiologischen und/oder ethologischen Mechanismus im Nutztierverhalten zu erkennen.

Es wird also vorgeschlagen mit dem Kamerasystem das Bewegungsprofil der einzelnen Nutztiere zu tracken. Damit kann eine Bewegungshistorie des Klein- und/oder Mittelviehs erstellt werden, und dieses Profil als Clouddaten gespeichert werden. Anhand des Bewegungsprofils kann beispielsweise verifiziert werden, ob die Hühner aufgebracht oder ruhig oder sich zu Gruppen zusammenfinden, was auf eine Angstreaktion zurückgeführt werden könnte.

Vorzugsweise umfasst das Verfahren die zusätzlichen Schritte: Verwenden eines Kamerasystems als erste Sensoreinrichtung, das mit einem Bilderkennungsalgorithmus dazu eingerichtet ist, einen physiologischen und/oder den ethologischen Mechanismus im Nutztierverhalten zu erkennen und Verwenden von Stallklimasensoren als verteilte Sensoreinrichtungen zum Erfassen von Größen zur Kennzeichnung eines Stallklimas in der landwirtschaftlichen Anlage, und Auswerten des als Kamerasignal vorliegenden ersten Sensorsignals der ersten Sensoreinrichtung mit dem Auswertungsmodul, wobei das Auswerten ein Berücksichtigen wenigstens eines Teils der gespeicherten Clouddaten umfasst, um den mit dem Kamerasystem erfassten physiologischen und/oder den ethologischen Mechanismus im Nutztierverhalten in Abhängigkeit von den als Clouddaten gespeicherten Größen zur Kennzeichnung des Stallklimas in der landwirtschaftlichen Anlage zu verifizieren.

Es wird also vorgeschlagen, ein Kamerabild zur Überwachung des Klein- und Mittelvieh anhand von zusätzlichen Sensoren zu verifizieren. Beispielsweise kann das erste Sensorsignal ein Kamerasignal sein, das mit gespeicherten Temperaturdaten oder anderen Bilddaten anderer Kameras verifiziert wird. In einem konkreten Beispiel könnte mit einem Kamerasystem als erste Sensoreinrichtung optisch erkannt werden, dass die Tiere zittern. Die Ursache für das Zittern könnte Kälte oder Angst sein, wenn die Tiere z.B. ein lautes Geräusch gehört haben und sich fürchten. Anhand der zusätzlichen Berücksichtigung der gespeicherten Clouddaten, kann das Kamerasignal, d.h. das erste Sensorsignal, mit den Clouddaten verifiziert werden, die beispielsweise Temperaturdaten der Anlage umfassen. Das Auswertungsmodul verifiziert dann das Kamerasignal in Abhängigkeit der gespeicherten Temperaturdaten und schließt darauf, dass ein Kältezittern vorliegt. Daran anschließend kann dann ein Regeleingriff erfolgen und die Temperatur erhöht werden. Im Falle eines Angstzitterns könnte kein Regeleingriff erfolgen oder beruhigende akustische Signale erzeugt werden, um den Stress der Tiere zu reduzieren. Stress wirkt sich dabei negativ auf die Produktivität und das Wachstum der Tiere aus.

Es hat sich gezeigt, dass sich mit der Verbesserung der Qualität des ersten Sensorsignals mittels Cloudmechanismen vor allem kamerabasierende, insbesondere mit einer oder mehreren gekoppelten Kameras, automatische Interpretationen von Situationen in der landwirtschaftlichen Anlage nutzen lassen. Bisher haben Sensoren z.B. zur Detektion von physiologischen und/oder ethologischen Mechanismen des Tierverhaltens solche Mechanismen zwar erkannt werden können, aber die Aussagesicherheit einer solchen Interpretation war bisher zu tief um darauf basierend Aktionen in der landwirtschaftlichen Anlage auszulösen. Durch den Einbezug von zusätzlichen kontextbezogenen Sensorwerten (gleiche Tierart, ähnlicher Stallbau, ähnliche Stallklimasituation, ähnliches Aussenklima/Jahreszeit, usw.) werden automatisierte Aktionen möglich, d.h. Steuereingriffe.

Vorzugsweise umfasst der Schritt Auswerten des ersten Sensorsignals mit einem Auswertungsmodul den zusätzlichen Schritt: Verwenden eines maschinellen Lernalgorithmus zur Auswertung des ersten Sensorsignals und der gespeicherten Clouddaten, um das erste Sensorsignal in Abhängigkeit von den gespeicherten Clouddaten mit dem maschinellen Auswertungsalgorithmus zu verifizieren.

Es wird also vorgeschlagen einen maschinellen Lernalgorithmus zur Auswertung des ersten Sensorsignals und der gespeicherten Clouddaten einzusetzen. Es sind eine Reihe von maschinellen Lernalgorithmen bekannt, wie zum Beispiel künstliche neuronale Netze. Dieser Algorithmus ist beispielsweise in dem Auswertungsmodul als Computerprogramm implementiert. Der Lernalgorithmus liest das erste Sensorsignal und die Clouddaten als Eingangsdaten ein, führt einen Algorithmus aus, und gibt anschließend einen Indikator oder Wert aus, der das erste Sensorsignal als verifiziert kennzeichnet. Künstliche neuronale Netze können auch als KI bezeichnet werden und beschreiben Algorithmen der künstlichen Intelligenz.

Weiter bevorzugt ist der maschinelle Lernalgorithmus ein trainiertes künstliches neuronales Netz zum Verifizieren des ersten Sensorsignals und der gespeicherten Clouddaten, um das erste Sensorsignal in Abhängigkeit von den gespeicherten Clouddaten mit dem trainierten neuronalen Netz zu verifizieren.

Es wird also vorgeschlagen, dass der maschinelle Lernalgorithmus zur Auswertung des ersten Sensorsignals und der gespeicherten Clouddaten ein künstliches neuronales Netz (KNN) ist. Das KNN ist beispielsweise in dem Auswertungsmodul als Programm oder Code implementiert. Das KNN liest das erste Sensorsignal und die Clouddaten als Eingangsdaten ein, vergleicht diese Eingangsdaten mit den antrainierten Merkmalen, die auch als Features bekannt sind, und gibt anschließend einen Indikator oder Wert aus, der das erste Sensorsignal kennzeichnet. Ein Ausgabewert des KNN könnte beispielsweise ein Vertrauenswert sein, der zwischen 0 bis 100% liegt oder ein Wert für ein Maß der Abweichung zu den Clouddaten. Es versteht sich, dass das trainierte KNN zuvor mit gelabelten Datensätzen trainiert wurde, d. h. mit bekannten und bereits klassifizierten Datensätzen. Beispielsweise wurde das KNN mit bekannten Bilddaten, in denen das Klein- und/oder Mittelvieh gezittert hat und mit Temperatur trainiert. So gibt das KNN beispielsweise bei vorliegenden niedrigen Temperaturen und einem Zittern der Tiere aus, dass das erkannte Zittern als Kältezittern verifiziert ist.

Besonders bevorzugt wird ein cloudbasierter maschineller Lernalgorithmus verwendet, der in der Cloudcomputereinrichtung eingerichtet ist. Es wird also vorgeschlagen, den Algorithmus extern in der Cloudcomputereinrichtung zu implementieren.

Es hat sich gezeigt, dass bei einer großen Datenvielfalt, die Vielzahl der Daten besonders geeignet ist, mittels künstlicher Intelligenz interpretiert, verbessert und/oder akkumuliert zu werden. Dabei wird vorzugsweise zur Reduktion einer Kommunikationsmenge eine Datenverarbeitung außerhalb der Farm vorgeschlagen, insbesondere durch Cloudprocessing. Es wird also vorgeschlagen eine Datenaufbereitung extern vorzunehmen. Zusätzlich können Auswertungsergebnisse oder empfangene Freigabesignale in die Cloud hochgeladen werden und beispielsweise als Lernmatrizen für maschinelle Lernverfahren verwendet werden. Dies erlaubt eine noch feinere Steuerung der Zielparameter und/oder erlaubt eine Suche nach Auffälligkeiten ohne spezifische Suchrichtungsvorgabe auszuführen. So wird ein vorbeugendes Steuerverfahren bereitgestellt. Dies erlaubt zudem entsprechende zusätzliche Lehrmatrizen zu erzeugen und maschinelle Auswertungsalgorithmen für zukünftige ähnliche Fälle zu unterstützen. Insbesondere können durch diesen Prozess Elemente des reinforced learnings verwendet werden. Mit anderen Worten: Die Beurteilung durch den Menschen wird zweifach verwendet: Einerseits wird eine Steueraktion in der Anlage ausgelöst und andererseits kann ein Auswertungsalgorithmus auf Basis des Freigabesignals weiter angelernt werden, um zukünftige Beurteilungen zu verbessern.

Vorzugsweise umfasst das Verfahren den zusätzlichen Schritt: Bereitstellen einer Benutzerschnittstelle zum Empfangen von Entscheidungssignalen und zur Berücksichtigung in dem Entscheidungsmodul, insbesondere nach Erzeugen eines verifizierten Warnsignals und/oder nach Erzeugen eines verifizierten Vorschlags für optimierte Betriebsparametern zu empfangen.

Vorzugsweise wird auf Basis des Entscheidungssignals ein verifiziertes Steuersignal zum Ansteuern wenigstens eines Stellmittels der landwirtschaftlichen Anlage erzeugt.

Es wird also vorgeschlagen, dass über eine Benutzerschnittstelle, die als Eingabeschnittstelle aufgefasst werden kann, Entscheidungen des Anlagenbetreibers und/oder -operators empfangen werden. Die Entscheidungssignale bzw. das Entscheidungssignal kann als manuelles Signal oder Freigabe aufgefasst werden. Wird dem Anlagenbetreiber und/oder dem -operator beispielsweise ein verifiziertes Warnsignal oder ein verifizierter Vorschlag angezeigt, kann dieser auf Basis der Warnung oder des Vorschlags eine Ansteuerung eines Stellmittels der landwirtschaftlichen Anlage durch eine Freigabe auslösen. Es wird also eine zusätzliche und manuelle Freigabe durch den Anlagenbetreiber oder -operator vorgeschlagen. Damit wird eine zusätzliche Sicherheitsstufe vorgeschlagen, und Eingriffe durch Ansteuerung in der landwirtschaftlichen Anlage erst ausgelöst, wenn die Freigabe durch den Betreiber bzw. Bediener vorliegt. So können falsche automatisierte Eingriffe in der landwirtschaftlichen Anlage reduziert werden.

Zusätzlich oder alternativ erfolgt vorzugsweise auf Basis des Entscheidungssignals ein Anpassen eines maschinellen Lernalgorithmus und/oder eines Big-Data-Algorithmus und/oder eines Cloud-Computing-Algorithmus, wobei der Algorithmus oder die Algorithmen dazu eingerichtet sind, das erste Sensorsignal zu verifizieren.

Es wird also vorgeschlagen, dass die verwendeten Algorithmen, durch die Entscheidungssignale des Anlagenbetreibers und/oder des Anlagenoperators angepasst werden, was als Anlernen oder Tuning aufgefasst werden kann. Dies kann auch als ein bestärkendes Lernen aufgefasst werden. Somit wird in vorteilhafter Weise erreicht, dass falsch eingestellte Algorithmen zum Verifizieren des ersten Sensorsignals nachträglich über die Entscheidungssignale angepasst werden können und individuell auf die Anlage anpassbar sind. Zudem wird so ermöglicht generische Algorithmen, auf die eigene spezielle landwirtschaftliche Anlage anzupassen.

Vorzugsweise umfasst der Schritt Auswerten des ersten Sensorsignals mit einem Auswertungsmodul den Schritt: Bewerten des ersten Sensorsignals in Abhängigkeit der gespeicherten Clouddaten bezüglich ihrer Steuerungswirksamkeit, und Bestimmen eines Wirksamkeitswertes als Maß für die Steuerungswirksamkeit des ersten Sensorsignals.

Es wird also vorgeschlagen, dass ein Wert für die Wirksamkeit eines Steuereingriffes mit dem Auswertungsmodul bestimmt wird. Dieser Wert kann mit einem Algorithmus bestimmt werden und dem ersten Sensorsignal zugeordnet werden. Durch die Zuordnung des Wirksamkeitswertes zu dem ersten Sensorsignal kann der Anlagenbetreiber oder Anlagenoperator oder ein anderer Algorithmus den Wert bewerten und/oder auswerten. Zudem kann dieser Wert mit einem Schwellenwert verglichen werden und basierend darauf ein Steuersignal, ein Warnsignal und/oder ein Vorschlag für Betriebsparameter oder Betriebseinstellungen erzeugt werden. Anhand des bestimmten Wirksamkeitswertes kann so die potentielle Wirksamkeit eines Steuerungseingriffes im Vergleich zu anderen Steuereingriffen angezeigt werden, denen ebenfalls ein solcher Wert zugeordnet ist. Es kann so leicht der effizienteste Eingriff identifiziert werden.

Zusätzlich oder alternativ wird vorgeschlagen, dass der Schritt Auswerten des ersten Sensorsignals mit einem Auswertungsmodul den Schritt umfasst: Bewerten des ersten Sensorsignals in Abhängigkeit der gespeicherten Clouddaten bezüglich der korrekten Funktionsfähigkeit der Sensoreinrichtung, und Bestimmen eines Funktionsfähigkeitswertes als Maß für die Funktionsfähigkeit der ersten Sensoreinrichtung.

Es wird also vorgeschlagen, dass ein Wert für die Funktionsfähigkeit der Sensoreinrichtung mit dem Auswertungsmodul bestimmt wird. Dieser Wert kann mit einem Algorithmus bestimmt werden und dem ersten Sensorsignal zugeordnet werden. Durch die Zuordnung des Funktionsfähigkeitswertes zu dem ersten Sensorsignal kann der Anlagenbetreiber oder Anlagenoperator oder ein anderer Algorithmus den Wert bewerten und/oder auswerten. Zudem kann dieser Wert mit einem Schwellenwert verglichen werden und basierend darauf ein Steuersignal, ein Warnsignal und/oder ein Vorschlag für Betriebsparameter oder Betriebseinstellungen erzeugt werden. Anhand des bestimmten Funktionsfähigkeitswertes kann so die Funktionsfähigkeit einer Sensoreinrichtung im Vergleich zu anderen Sensoreinrichtungen angezeigt werden, denen ebenfalls ein solcher Wert zugeordnet ist. Es kann so leicht eine defekte oder beschädigte Sensoreinrichtung identifiziert werden.

Zusätzlich oder alternativ wird vorgeschlagen, dass der Schritt Auswerten des ersten Sensorsignals mit einem Auswertungsmodul den Schritt umfasst: Bewerten des ersten Sensorsignals in Abhängigkeit der gespeicherten Clouddaten bezüglich einer Abweichung des Sensorsignals zu den gespeicherten Clouddaten, und Bestimmen eines Abweichungswertes als Maß für die Abweichung des ersten Sensorsignals zu den Clouddaten.

Es wird also vorgeschlagen, dass ein Wert für die Abweichung des ersten Sensorsignales zu den Clouddaten mit dem Auswertungsmodul bestimmt wird. Dieser Wert kann mit einem Algorithmus bestimmt werden und dem ersten Sensorsignal zugeordnet werden. Durch die Zuordnung des Abweichungswertes zu dem ersten Sensorsignal kann der Anlagenbetreiber oder Anlagenoperator oder ein anderer Algorithmus den Wert bewerten und/oder auswerten. Zudem kann dieser Wert mit einem Schwellenwert verglichen werden und basierend darauf ein Steuersignal, ein Warnsignal und/oder ein Vorschlag für Betriebsparameter oder Betriebseinstellungen erzeugt werden. Anhand des bestimmten Abweichungswertes kann so die Abweichung des ersten Sensorsignales und damit der Sensoreinrichtung im Vergleich zu anderen Sensoreinrichtungen angezeigt werden, denen ebenfalls ein solcher Wert zugeordnet ist. Es kann so leicht eine defekte oder beschädigte Sensoreinrichtung identifiziert werden. Zudem ist es durch den Vergleich möglich, Trends der Sensoreinrichtung im Vergleich zu den anderen Sensoreinrichtungen zu erkennen.

Zusätzlich oder alternativ wird vorgeschlagen, dass der Schritt Auswerten des ersten Sensorsignals mit einem Auswertungsmodul den Schritt umfasst: Bewerten des ersten Sensorsignals in Abhängigkeit der gespeicherten Clouddaten bezüglich einer Plausibilität des Sensorsignals im Vergleich zu den gespeicherten Clouddaten, und Bestimmen eines Plausibilitätswertes als Maß für die Plausibilität des ersten Sensorsignals zu den Clouddaten.

Es wird also vorgeschlagen, dass ein Wert für die Plausibilität des ersten Sensorsignales zu den Clouddaten mit dem Auswertungsmodul bestimmt wird. Dieser Wert kann mit einem Algorithmus bestimmt werden und dem ersten Sensorsignal zugeordnet werden. Durch die Zuordnung des Plausibilitätswertes zu dem ersten Sensorsignal kann der Anlagenbetreiber oder Anlagenoperator oder ein anderer Algorithmus den Wert bewerten und/oder auswerten. Zudem kann dieser Wert mit einem Schwellenwert verglichen werden und basierend darauf ein Steuersignal, ein Warnsignal und/oder ein Vorschlag für Betriebsparameter oder Betriebseinstellungen erzeugt werden. Anhand des bestimmten Plausibilitätswertes kann so die Plausibilität des ersten Sensorsignales und damit der Sensoreinrichtung im Vergleich zu anderen Sensoreinrichtungen angezeigt werden, denen ebenfalls ein solcher Wert zugeordnet ist. Es kann so leicht eine defekte oder beschädigte Sensoreinrichtung identifiziert werden. Zudem ist es durch den Vergleich möglich, Trends der Sensoreinrichtung im Vergleich zu den anderen Sensoreinrichtungen zu erkennen. Es wird also vorgeschlagen die Sensorwerte bezüglich ihrer Plausibilität zu überwachen. Dabei kann sowohl die Vergangenheit (plötzliches Wegdriften eines Sensorwertes über die Zeit, oder Sprungantwort ohne erklärbaren Grund), als auch die Parallelität (Selektion von Daten aus einer Vielzahl von Farmen, basierend auf Ähnlichkeitskriterien des Kontextes und dann Vergleich der Sensordaten) und/oder die Datenrekonstruktion (z.B. Ermitteln der wahrscheinlichsten Temperatur durch prozessieren von absoluter und relativer Luftfeuchtigkeit) sinnvoll sein. Insbesondere erlauben die Kombination mehrerer dieser grundlegenden bigdatatypischen Überprüfungsformen die Erstellung einer besonders belastbaren Datenbasis für einen Plausibilitätsentscheid. Diese können dann entweder in einem automatischen Verfahren einbezogen oder durch menschliche Bestätigung ausführungswirksam werden.

Zusätzlich oder alternativ wird vorgeschlagen, dass der Schritt Auswerten des ersten Sensorsignals mit einem Auswertungsmodul den Schritt umfasst: Anzeigen auffälliger erster Sensorsignale nach der Auswertung, insbesondere um die auffälligen Sensorsignale einem Nutzer zur Überprüfung bereitzustellen.

Es wird also vorgeschlagen, das erste Sensorsignal, sollte es als ein auffälliges Signal bewerten werden, kenntlich zu machen und anzuzeigen. Das Anzeigen kann auf unterschiedliche Art und Weise erfolgen, beispielsweise kann das Sensorsignal optisch oder akustisch angezeigt werden, mit einem dazu eingerichteten Anzeigemittel, wie Bildschirmanzeigen, Sirenen, Leuchten oder dergleichen. In einer besonders bevorzugten Ausführungsform werden die auffälligen Sensorsignale einem Nutzer zur Überprüfung bereitgestellt. Die Bereitstellung kann beispielsweise mit einem Endgerät erfolgen. Das Anzeigen kann auch mit einer Liste oder dergleichen erfolgen.

Vorzugsweise umfasst das Verfahren den zusätzlichen Schritt: Empfangen einer Ausführungsbestätigung. Weiter bevorzugt wird die Ausführungsbestätigung von einem Anlagenbetreiber oder einem Operationscenter empfangen.

Die Ausführungsbestätigung kann auch als Freigabesignal verstanden werden. Die Ausführungsbestätigung wird bevorzugt über eine Benutzerschnittstelle empfangen. Es wird also eine zusätzlich externe Verifikation vorgeschlagen, die durch einen Anlagenbetreiber oder von einem Operationscenter erfolgt. Das Operationscenter kann auch als eine Leitwarte aufgefasst werden, an der zentral Daten zusammenlaufen. So kann eine Rückfrage beim lokalen Farmer vor Ausführung einer Ansteuerung erfolgen.

Es wird also ein Spezialist oder ein Operateur zu einer Datensituation befragt, z. B. zu einer Interpretation eines Kamerabildes mit toten Hühnern, und dazu eine Handlungsempfehlung abgegeben. Der Angefragte bestätigt die Handlungsempfehlung zur Ausführung mit der Ausführungsbestätigung, lehnt sie ab oder veranlasst eine andere Gegenmaßnahme. Dies kann über ein Benutzerinterface der Anlage oder über ein Endgerät erfolgen.

Besonders bevorzugt wird nach Ablauf einer vorbestimmten Zeitdauer ein Steuersignal zum Ansteuern wenigstens eines Stellmittels der landwirtschaftlichen Anlage erzeugt, wenn keine Ausführungsbestätigung mit der Steuereinrichtung empfangen wird. Besonders bevorzugt erfolgt das Erzeugen des Steuersignals, wenn keine Nutzereingabe über eine Eingabeschnittstelle der Steuereinrichtung empfangen wird. Die Nutzereingabe kann also als Ausführungsbestätigung verstanden werden.

Es wird also vorgeschlagen, eine Zeitdauer festzulegen, innerhalb derer die Ausführungsbestätigung empfangen werden soll. Wird die vorbestimmte Zeit überschritten, wird automatisiert eine Steuermaßnahme durch die Steuereinrichtung ausgelöst, die ein Steuersignal erzeugt, das einem Stellmittel vorgegeben wird. Reagiert z. B. ein Anlagenbetreiber nicht schnell genug, leitet die Steuereinrichtung so eine Steuermaßnahme. So wird verhindert, dass Regelungseingriffe zu spät oder gar nicht ausgeführt werden. Die vorbestimmte Zeitdauer wird beispielsweise mit einem Ablauftimer in der Steuereinrichtung hinterlegt. Es wird also eine Timeoutfunktion vorgeschlagen und bei einem Ausbleiben einer Reaktion ein automatischer Regelungseingriff mit der Steuereinrichtung ausgeführt.

Weiter besonders bevorzugt sind Ablaufpläne in der Steuereinrichtung hinterlegt zum Erzeugen eines Steuersignals zum Ansteuern wenigstens eines Stellmittels der landwirtschaftlichen Anlage.

In einer besonders bevorzugten Ausführungsform sind die Ablaufpläne für Ausführungsbestätigungen zeitlich und/oder situationsabhängig unterschiedlich.

Es wird also vorgeschlagen, dass Ablaufpläne in der Steuereinrichtung implementiert bzw. gespeichert sind, die automatisiert von der Steuereinrichtung ausgeführt werden. Die Ablaufpläne umfassen vorbestimmte Eintrittsbedingungen und geben als Ausgangsgröße Steuersignale zur Ansteuerung der Stellmittel der landwirtschaftlichen Anlage aus. Die Ablaufpläne können auch Prozess- oder Steuerpläne aufgefasst werden. Bevorzugt sind unterschiedliche Ablaufpläne für unterschiedliche Eintrittsbedingungen in der Steuereinrichtung implementiert, d.h. mehrere unterschiedliche Ablaufpläne sind in der Steuereinrichtung implementiert und werden situationsabhängig unterschiedlich ausgelöst. Eintrittsbedingungen zum Auslösen der Ablaufpläne können Freigabesignale bzw. Ausführungsbestätigungen sein, die von einem Anlagenbetreiber über eine Benutzerschnittstelle empfangen werden.

Vorzugsweise umfasst das Verfahren den zusätzlichen Schritt: Erzeugen eines Steuersignals zum Ansteuern wenigstens eines Stellmittels der landwirtschaftlichen Anlage, wenn innerhalb der vorbestimmten Zeitdauer ein veränderter Sensorwert vorliegt.

Es wird also zusätzlich oder alternativ zu dem Ablauftimer vorgeschlagen, dass ein Steuersignal erzeugt wird, wenn ein veränderter Sensorwert vorliegt, bevorzugt, wenn das erste Sensorsignal und/oder die als Clouddaten gespeicherten Sensorwerte sich verändert. Es wird also vorgeschlagen, dass automatisiert mit einem Regelungseingriff in die landwirtschaftliche Anlage eingegriffen wird, wenn sich die Sensorsignale der Sensoreinrichtungen weiter verändern. Es kann beispielsweise vorkommen, dass einem Anlagenbetreiber das erste Sensorsignal als unverifiziert angezeigt wird. Reagiert der Anlagenbetreiber darauf nicht direkt, und verändert sich das Sensorsignal weiter, greift die Steuereinrichtung ein und führt eine automatisierte Ansteuerung aus. Es wird dazu ein Steuersignal erzeugt, wenn ein veränderter Sensorwert vorliegt und bevorzugt, wenn ein Freigabesignal nicht vorliegt.

Vorzugsweise umfasst das Verfahren den zusätzlichen Schritt: Anzeigen eingeleiteter Steuermaßnahmen.

Es wird also vorgeschlagen, dass eine Ansteuerhistorie automatisiert erstellt wird, in der die eingeleiteten Steuermaßnahmen dokumentiert sind. Dazu können die eingeleiteten Steuermaßnahmen in Form einer Liste elektronisch abrufbar gespeichert werden. Diese Liste in daraufhin mit einem Endgerät abrufbar und so können die eingeleiteten Steuermaßnahmen angezeigt werden. Damit wird erreicht, dass manuell die Steuermaßnahmen im Nachhinein geprüft werden können und ggf. falsche Steuermaßnahmen nachträglich erkannt werden können. Zudem können besonders regelmäßig auftretende Steuermaßnahmen, die mit der Steuereinrichtung eingeleitet wurden identifiziert werden. So können falsche Regelmaßnahmen erkannt und potentiell in der Zukunft behoben werden.

Vorzugsweise umfasst das Anzeigen ein Anzeigen von Zusatzinformationen, wobei eine Steuermaßnahme durch Ansteuerung mittels eines Steuersignals zum Ansteuern wenigstens eines Stellmittels der landwirtschaftlichen Anlage eingeleitet wird.

Es wird also vorgeschlagen, dass die Stallsteuerung bzw. die Steuereinrichtung vor Ort dem Anlagenbetreiber oder -operator die eingeleitete Maßnahme mit Zusatzinformationen anzeigt. Der Anlagenbetreiber oder -operator kann so die Maßnahmen gesammelt prüfen und diese auf Richtigkeit prüfen. So können falsche Regelmaßnahmen erkannt und potentiell in der Zukunft behoben werden. Es wird also vorgeschlagen, dass eine Zusatzinformation lokal dem Anlagenbetreiber angezeigt wird, welche dem Betreiber einen Hinweis gibt, warum eine Regelmaßnahme bzw. ein Regeleingriff eingeleitet ist. Dies reduziert das gegeneinander arbeiten der Steuereinrichtung und des Anlagenbetreibers, der ggf. manuell gegen den automatisierten Regeleingriff vorgehen will. Wenn zum Beispiel der Farmer feststellt, dass die Temperatur im Stall sinkt, weil viel kalte Außenluft zugeführt wird, wäre seine erste Reaktion die Temperatur höher zu stellen oder die Außenluft auszustellen. Wenn nun aber eine Zusatzinformation mitgegeben wird, die da sagt "Feuchtigkeit zu hoch, automatischer Feuchtigkeitsreduktionszyklus mittels Außenluft eingeleitet", kann ein solches gegeneinander Ankämpfen vermieden werden.

Vorzugsweise umfasst das Verfahren den zusätzlichen Schritt: Einstellen einer Wirkung der Clouddaten, bevorzugt für eine nachfolgende Auswertung auf Basis weiterer Clouddaten.

Es wird also vorgeschlagen, dass der Einfluss der Clouddaten einstellbar ist, d.h. die Wirkung der Clouddaten in dem Auswertungsschritt, um das erste Sensorsignal zu verifizieren. Wird beispielweise erkannt, dass eine Verifikation eines ersten Sensorsignals regelmäßig als Fehler angezeigt wird und dieser Fehler bekannt ist, kann beispielsweise das Verifizieren des ersten Sensorsignals anhand der Clouddaten ausgestellt werden. In einem einfachen Beispiel wird in einem Softwareprogramm ein Verifizieren anhand der Clouddaten mit einem Eingabefeld ausgestellt. Die Einstellbarkeit des Einflusses der Clouddaten kann somit in einem einfachen Fall ein Ein- und Ausschalten der Verifizierung des ersten Sensorsignals anhand der Clouddaten sein. Dies ist besonders vorteilhaft, wenn eine Verifizierung eine Zeit lang nicht erfolgen soll oder neue Sensoreinrichtung getestet und in den Betrieb genommen werden. Es wird vorzugsweise vorgeschlagen, dass zu jedem Sensorsignal der Einfluss der Clouddaten einstellbar ist. Dies kann beispielsweise in einem Softwareprogramm erfolgen. Bevorzugt erfolgt das Einstellen der Wirkung der Clouddaten für eine nachfolgende Auswertung auf Basis weiterer Clouddaten. Es wird also vorgeschlagen, dass die Wirkung der Clouddaten auf Basis anderer Clouddaten eingestellt wird.

Vorzugsweise umfasst der Schritt Speichern der erfassten Sensorsignale als Clouddaten in der Cloudcomputereinrichtung den zusätzlichen Schritt: Speichern von Clouddaten anderer landwirtschaftlichen Anlagen, die in Bezug auf die zu steuernde landwirtschaftliche Anlage einen klimaähnlichen Standort aufweisen, insbesondere ist ähnlicher klimatischer Standort ein Standort der nicht weniger als 100 km entfernt ist, und/oder dessen Breitengraden nicht mehr als +/- 10 Breitengrad vom Standort der zu steuernden Anlage abweichen und/oder dessen Höhe über Meer um weniger als 300m von der der zu steuernden Anlage abweicht und/oder der aus dem demselben Bezirk oder Land stammt.

Es wird also vorgeschlagen, Sensorsignale anderer landwirtschaftlichen Anlagen für das Verifizieren des wenigstens einen ersten Sensorsignals einzusetzen, die in ähnlichen klimatischen Bedingungen betrieben werden. Durch den klimaähnlichen Standort kann die andere landwirtschaftliche Anlage als Vergleichsanlage dienen. Es können so Clouddaten einer anderen Anlage berücksichtigt werden und die Datengrundlage für die anzusteuernde Anlage vergrößert werden. Zudem können für das Verifizieren des ersten Sensorsignals die zusätzlichen Sensordaten als Clouddaten berücksichtigt werden und so die Regeleingriffe anhand der zusätzlichen Clouddaten verbessert werden. Es hat sich gezeigt, dass eine Datenbasis mit Fremddaten aufgebaut werden kann, wenn die einfließenden Clouddaten derart ausgewählt werden, dass sie von anderen landwirtschaftlichen Anlagen entstammen, also z.B. von landwirtschaftlichen Anlagen in ähnlichen Breitengraden, in ähnlichen Höhenlagen, und/oder im selben Land oder Bezirk.

Vorzugsweise wird der Schritt Speichern der erfassten Sensorsignale als Clouddaten in der Cloudcomputereinrichtung häufiger als alle 120 Minuten ausgeführt wird, bevorzugt häufiger als alle 30 Minuten ausgeführt, besonders bevorzugt häufiger als alle 10 Minuten ausgeführt.

Es wird also vorgeschlagen, regelmäßig Clouddaten zu erstellen und die erfassten Sensorsignale in der Cloudcomputereinrichtung abzuspeichern. So wird eine aktuelle Datengrundlage bereitgestellt und das Verifizieren des ersten Sensorsignals umfasst regelmäßig neu hinzugefügte und aktuelle Clouddaten. Es wurde festgestellt, dass eine besonders gute Datenbasis zum Verifizieren vorliegt, wenn die erfassen Sensorsignale, die als Clouddaten in der Cloudcomputereinrichtung gespeichert werden, häufiger als alle 2 Stunden, insbesondere häufiger als alle 30 Minuten bevorzugt häufiger als alle 10 Minuten hochgeladen werden. So wird ein Kompromiss zwischen Datenmenge und Aktualität der Daten bereitgestellt. Bei einer tieferen Hochladefrequenz ist die Granularität der Clouddaten zu groß. Ab einem Hochladeintervall von größer 120 Minuten können bereits zu große Prozessschwankungen auftreten. So ist zum Beispiel ein Cloudupdate von einmal pro Tag zu träge um Tendenzen zu erkennen und damit zu risiko behaftet für eine Rückkopplung. Diese Datenupdatehäufigkeit wird insbesondere zum Ausfiltern von unerwünschten Schwingkreisen und zur Ausreißerunterdrückung von Einzelwerten benötigt.

Vorzugsweise werden eine Vielzahl von Sensoreinrichtungen in dem Verfahren berücksichtigt, insbesondere werden mehr als 100 Sensoreinrichtungen in dem Verfahren berücksichtigt. Zusätzlich oder alternativ werden eine Vielzahl von Sensoreinrichtungen anderer landwirtschaftlicher Anlagen in dem Verfahren berücksichtigt, insbesondere werden mehr als 100 Sensoreinrichtungen anderer landwirtschaftlicher Anlagen in dem Verfahren berücksichtigt.

Es wird also vorgeschlagen, eine Vielzahl von ersten und/oder weiteren Sensoreinrichtungen für das Verifizieren einzusetzen. Durch die Berücksichtigung einer Vielzahl von Sensoren wird eine große und diverse Datengrundlage bereitgestellt, auf dessen Basis das Verifizieren mit dem Auswertungsmodul erfolgt. Damit steigt die Auswertungsgenauigkeit. Es wird also ein Bigdata-System vorgeschlagen. Big Data bezeichnet dabei die Ansammlung einer großen Menge von Daten z.B. von Temperaturmesswerten, wobei die Datenmenge so groß ist, dass deren Interpretation über manuelle Mechanismen nicht mehr sinnvoll ist. Das System bezieht nicht nur Daten aus der Cloud, sondern liefert diese auch in die Cloud. So wird eine erforderliche Datenbasis geschaffen. Es wurde erkannt, dass eine Berücksichtigung von mehr als 100 Sensoren zu einer geeigneten Datengrundlage führen.

Zudem wird vorzugsweise vorgeschlagen, mehr als eine Steuereinrichtung einzusetzen, insbesondere mehr als zwei oder vier Steuereinrichtungen pro landwirtschaftlicher Anlage.

Nebst Redundanzüberlegungen wird zum Beispiel in der Schweinezucht pro Klimazone eine Steuereinrichtung mit Cloudanbindung verwendet. Eine Farm hat typischerweise ein bis drei Häuser mit mehreren Klimazonen. Bei der Hühnerzucht wird typischerweise eine Steuereinrichtung pro Haus verwendet, aber eine Hühnerfarm weist typischerweise sechs Häuser auf. Gerade für solche Redundanzüberlegungen sind mehrere Steuereinrichtungen sinnvoll: Da häufig die Bauart unter den Häusern identisch ist, lässt sich so ein Sensor- oder ein Steuerungsausfall zumindest im Notfall über die Clouddaten der anderen Häuser unter Berücksichtigung der durch die Gesamtclouddaten aufgezeigten Varianzen gut in einer Notbetriebsart betreiben.

Vorzugsweise umfasst das Verfahren den zusätzlichen Schritt: Bestimmen eines Maßes für eine Abweichung und/oder für eine Vertrauenswürdigkeit des erstens Sensorsignals in Abhängigkeit der gespeicherten Clouddaten.

Es wird also vorgeschlagen, einen konkreten Wert für eine Abweichung und/oder eine Vertrauenswürdigkeit des ersten Sensorsignals zu bestimmen. Das Bestimmen erfolgt bevorzugt mit dem Auswertungsmodul, das zur Bestimmung des Maßes für die Abweichung und/oder für die Vertrauenswürdigkeit des erstens Sensorsignals in Abhängigkeit der gespeicherten Clouddaten eingerichtet ist. Beispielsweise ist das Maß ein prozentuale Wert zwischen 0% und 100%, wobei der 100% eine Übereinstimmung oder eine Vertrauenswürdigkeit beschreibt und 0% eine vollständige Abweichung und keine Vertrauenswürdigkeit. Es als Maß auch eine Skala oder dergleichen vorgesehen sein. Der Maß für die Abweichung und/oder die Vertrauenswürdigkeit kann eingesetzt werden, um die das Sensorsignal einfacher zu bewertet oder basierend auf dem Wert Steuermaßnahmen einzuleiten.

Weiter bevorzugt umfasst das Verfahren wenigstens einen der nachfolgenden Schritte: Erzeugen eines oder mehrere verifizierter Steuersignale und/oder verifizierter Warnsignale und/oder verifizierter Vorschläge, wobei das verifizierte Steuersignal und/oder das verifizierte Warnsignal und/oder der verifizierte Vorschlag je nach Maß der Abweichung und/oder der Vertrauenswürdigkeit erzeugt wird; und/oder Anpassen oder Verändern des ersten Sensorsignals je nach Maß der Abweichung und/oder der Vertrauenswürdigkeit.

Es wird also vorgeschlagen, dass auf Basis des bestimmten Wertes für die Abweichung und/oder der Vertrauenswürdigkeit ein Steuersignal, ein Warnsignal und/oder ein Vorschlag erzeugt wird. Die Erzeugung des Steuersignals, des Warnsignals und/oder des Vorschlags erfolgt dabei je nach Maß der Abweichung und/oder Vertrauenswürdigkeit, d. h. es wird vorgeschlagen, Schwellenwerte und/oder Grenzwerte für das Maß der Abweichung und/oder der Vertrauenswürdigkeit festzulegen. Auf Basis dieser Werte können dann die genannten Aktionen eingeleitet werden.

Vorzugsweise umfasst das Verfahren den zusätzlichen Schritt: Verändern oder Anpassen des ersten Sensorsignals in Abhängigkeit der Clouddaten nach der Verifizierung, so dass, das erste Sensorsignal nach dem Verändern oder anpassen weniger stark von den Clouddaten abweicht; und/oder Interpolieren mehrerer erster Sensorsignale und/oder mehrerer weiterer Sensorsignale mit einer Interpolationsfunktion, und Verändern oder Anpassen des ersten Sensorsignals in Abhängigkeit der Interpolationsfunktion, um ein interpoliertes erstes Sensorsignal zur Steuerung der landwirtschaftlichen Anlage bereitzustellen.

Es wird also vorgeschlagen, dass das erste Sensorsignal in Abhängigkeit der Clouddaten nach der Verifizierung automatisiert angepasst bzw. verändert wird, nämlich so, dass das erste Sensorsignal nach dem Verändern oder Anpassen weniger stark von den Clouddaten abweicht. Wird beispielsweise anhand des Vergleiches mit den Clouddaten mittels der Auswertung erkannt, dass eine Sensoreinrichtung eine konstante Abweichung zu anderen Sensoren aufweist oder einen ungenauen Messbereich aufweist, kann das erste Sensorsignal auf Basis der weiteren Sensorsignale angepasst und/oder verändert werden. So wird beispielsweise erreicht, dass ein ungenauer Temperatursensor durch die Berücksichtigung anderer Temperatursensoren mit neuen und genaueren Messwerten überschrieben wird. Als neue Werte für das Sensorsignal kann zum Beispiel ein Mittelwert übertypenähnliche Sensoren bestimmt werden. Zusätzlich oder alternativ wird vorgeschlagen, dass ein Interpolieren mehrerer erster Sensorsignale und/oder mehrerer weiterer Sensorsignale mit einer Interpolationsfunktion erfolgt, und Verändern oder Anpassen des ersten Sensorsignals in Abhängigkeit der Interpolationsfunktion ausgeführt wird, um ein interpoliertes erstes Sensorsignal zur Steuerung der landwirtschaftlichen Anlage bereitzustellen. So kann beispielsweise ein ungenaues Messsignal der ersten Sensoreinrichtung verbessert werden. Als Interpolationsfunktion kann grundsätzlich eine beliebige Funktion eingesetzt werden, beispielsweise kann eine Mittelwertbildung oder eine Newton-Interpolation oder dergleichen erfolgen. Es kann also beispielsweise vorgesehen sein, ein ungenaues Messsignal eines Temperatursensors durch ein gemitteltes Messsignal zu ersetzen. Das Veränderung und/oder Anpassen kann dabei auch ein inhaltliches Ergänzen von Daten sein. Es wird also vorgeschlagen, dass die Wirkung der Clouddaten situativ angepasst werden kann und/oder ein Maß der Wirkung der Clouddaten von weiteren Clouddaten abhängig ist. So kann zum Beispiel das Maß der Autonomie der Steuerung durch den Farmer vor Ort beschränkt oder die Beeinflussung durch Fremddaten ganz ausgeschaltet werden. Es kann so verhindert werden, dass falsche Clouddaten zu falschen Regeleingriffen führen.

Vorzugsweise wird vorgeschlagen, dass die Steuerungsparameter und/oder die Clouddaten durch Cloudcomputing in ihrem Inhalt verändert werden, insbesondere überhaupt erzeugt wurden.

Vorzugsweise ist die Steuereinrichtung Teil einer Regelung. Beim Steuern wird mit Hilfe einer Stellgröße eine Maschine oder Anlage beeinflusst, ohne, dass die Steuergröße auf die Stellgröße zurückwirkt. Regeln ist ein Vorgang, bei dem der IST-Wert einer Größe gemessen und durch Nachstellen dem SOLL-Wert angeglichen wird. Vorliegend wird also vorgeschlagen, dass die Steuereinrichtung eine Regelung Teil einer Regelung ist, z.B. der Regler, und dass dieser IST-Größen empfängt und mit einer SOLL-Größe vergleicht. Die Regeleinrichtung steuert dann auf Basis des Vergleichs zwischen SOLL- und IST-größe ein Stellmittel der landwirtschaftlichen Anlage an, um den Fehler zwischen SOLL- und IST-Größe zu verkleinern.

Bevorzugt ist die Regelung eine Regelung mit Optimierung von verschiedenen Sollparametern. Besonders bevorzugt, weisen die verschiedenen Sollparameter eine unterschiedliche konfigurierbare Priorität auf. Es wird also vorgeschlagen, dass die Regeleinrichtung mehrere Sollgrößen umfasst, also ein Multi-Input und Multi-Output-Regler ist. Vorzugsweise werden verschiedene Sollparameter in der Steuereinrichtung implementiert und diese weisen unterschiedlich konfigurierbare Prioritäten auf. Die unterschiedlichen Prioritäten können beispielsweise mit einstellstellbaren Gewichtungsfaktoren eingestellt werden, die den Einfluss der entsprechenden Sollgröße skalieren.

Vorzugsweise wird vorgeschlagen, dass der Schritt Auswerten des ersten Sensorsignals mit einem Auswertungsmodul den zusätzlichen Schritt umfasst: Auswerten der Clouddaten in einem Onlinebetrieb der Steuereinrichtung, wenn eine ordnungsgemäße Datenverbindung mit der Cloudcomputereinrichtung detektiert wird, und Umschalten in einen Lokalbetrieb der Steuereinrichtung, wenn keine ordnungsgemäße Datenverbindung mit der Cloudcomputereinrichtung detektiert wird.

Es wird also vorgeschlagen, dass die Steuereinrichtung einen Onlinebetrieb und einen Lokalbetrieb aufweist. Im Onlinebetrieb bezieht die Steuereinrichtung die gespeicherten Clouddaten aus der Cloudcomputereinrichtung. Im Lokalbetrieb, der auch als Offlinebetrieb aufgefasst werden kann, bezieht die Steuereinrichtung die keine Clouddaten aus der Cloudcomputereinrichtung, sondern lokal gespeicherte Clouddaten bzw. Sensordaten. Diese können auch als Lokaldaten verstanden werden. Lokaldaten sind Daten, die für eine Steuerungsentscheid zur Verfügung stehen, und die sowohl direkt von einem Sensor, als auch durch Akkumulation von verschiedenen Sensordaten gewonnen werden können, also lokal in der landwirtschaftlichen Anlage erfasst werden. So wird im Falle eines Ausfalls der Clouddaten kein falscher Regeleingriff vorgenommen. Die Steuerung beim Fehlen von Clouddaten funktionier aufgrund der Lokaldaten somit autonom. Das Steuerungssystem für die landwirtschaftliche Anlage wird also dahingehend erweitert, dass es bei der Verfügbarkeit von Clouddaten diese in den Steuerprozess einbezieht, aber auch im Offlinebetrieb autonom weiterarbeiten kann.

Es wird vorzugsweise als Vorsorgemaßnahme bei einem Verfügbarkeitsausfall der Clouddaten vorgeschlagen, dass bestimmte Daten, insbesondere Daten, deren zukünftige Verwendung absehbar ist, lokal abgespeichert werden, um eine Vorratsdatenhaltung bereitzustellen.

Vorzugsweise umfasst das Verfahren den zusätzlichen Schritt: Verarbeiten von lokal in der Steuereinrichtung gespeicherten Daten und/oder gespeicherten Clouddaten mittels einem maschinellen Lernalgorithmus und/oder mittels einem Big-Data-Algorithmus und/oder mittels einem Cloud-Computing-Algorithmus, insbesondere, um das erste Sensorsignal zu verifizieren. Es wird also vorgeschlagen, einen maschinellen Lernalgorithmus zum Verifizieren des ersten Sensorsignals einzusetzen. Ein Beispiel für einen maschinellen Lernalgorithmus ist zum Beispiel ein künstliches neuronales Netz. Der Begriff maschineller Lernalgorithmus kann also auch als ein Algorithmus aufgefasst werden, der adaptiv ausgebildet ist und durch Trainingsverfahren veränderbar ist. Zusätzlich oder alternativ kann auch ein Big-Data-Algorithmus vorgesehen sein. Beispielsweise sind als maschinelle Lernalgorithmus und/oder Big-Data-Algorithmen Bayes-Klassifikatoren, Clusterverfahren, Entscheidungsbäume, Fuzzy-Klassifikatoren, künstliche Neuronale Netze und/oder Klassifikationsverfahren, insbesondere die State-Vector-Maschine bekannt.

Vorzugsweise umfasst das Verfahren den zusätzlichen Schritt: Erzeugen eines oder mehrere verifizierter Steuersignale zum Ansteuern wenigstens eines Stellmittels der landwirtschaftlichen Anlage, wobei das verifizierten Steuersignal ein Steuersignal ist, das auf Basis der kombinierten Auswertung des ersten Sensorsignals und der Clouddaten erzeugt wird, erst dann, wenn über eine Benutzerschnittstelle ein Freigabesignal empfangen wird. Es wird also eine halbautomatisierte Ansteuerung der Stellmittelmittel der landwirtschaftlichen Anlage vorgeschlagen, die erst dann erfolgt, wenn ein Freigabesignal vorliegt.

In einem weiteren Erfindungsgemäßen Aspekt wird ein Steuersystem zum Steuern einer landwirtschaftlichen Anlage zur Kleinvieh- und/oder Mittelviehhaltung vorgeschlagen. Dieses umfasst eine erste Sensoreinrichtung zum Erfassen wenigstens eines ersten Sensorsignals, wobei die erste Sensoreinrichtung Teil der landwirtschaftlichen Anlage ist und zum Erfassen einer Prozessgröße und/oder Zustandsgröße der landwirtschaftlichen Anlage eingerichtet ist; eine Vielzahl örtlich in der landwirtschaftlichen Anlage verteilter Sensoren zum Erfassen einer Vielzahl von weiteren Sensorsignalen und/oder eine Vielzahl von örtlich in einer anderen landwirtschaftlichen Anlage verteilter Sensoren zum Erfassen einer Vielzahl von weiteren Sensorsignalen, wobei die verteilten Sensoreinrichtungen zum Erfassen von Prozessgrößen und/oder Zustandsgrößen der landwirtschaftlichen Anlage eingerichtet sind; eine Cloudcomputereinrichtung zum Speichern der erfassten Sensorsignale als Clouddaten; und eine Steuereinrichtung zur Steuerung der landwirtschaftlichen Anlage, wobei die Steuereinrichtung ein Auswertungsmodul zum Auswerten des ersten Sensorsignals aufweist, wobei das Auswerten ein Berücksichtigen wenigstens eines Teils der gespeicherten Clouddaten umfasst, um das erste Sensorsignal in Abhängigkeit von den gespeicherten Clouddaten mit dem Auswertungsmodul zu verifizieren.

Die vorbeschriebenen Vorteile, Erklärungen und Definitionen zum Verfahren finden analog Anwendung für das vorstehend und nachstehend beschriebene Steuersystem und dessen bevorzugte Ausführungsformen.

Vorzugsweise ist die Steuereinrichtung zum Erzeugen eines verifizierten Steuersignals zum Ansteuern wenigstens eines Stellmittels der landwirtschaftlichen Anlage eingerichtet, wobei das verifizierte Steuersignal ein Steuersignal ist, das auf Basis der kombinierten Auswertung des ersten Sensorsignals und der Clouddaten erzeugt ist, und/oder die Steuereinrichtung ist zum Erzeugen eines verifizierten Warnsignals zum Anzeigen einer Warnung und/oder einer Störung der landwirtschaftlichen Anlage eingerichtet, wobei das verifizierte Warnsignal ein Warnsignal ist, das auf Basis der kombinierten Auswertung des ersten Sensorsignals und der Clouddaten erzeugt ist, und/oder die Steuereinrichtung ist zum Erzeugen eines verifizierten Vorschlags für optimierte Betriebsparametern der landwirtschaftlichen Anlage eingerichtet, wobei der verifizierte Vorschlag ein Vorschlag für optimierte Betriebsparametern ist, der auf Basis der kombinierten Auswertung des ersten Sensorsignals und der Clouddaten erzeugt ist.

Vorzugsweise ist das Steuersystem zum Ausführen des Verfahrens nach einer der vorstehenden Ausführungsformen eingerichtet, und weist zum Ausführen des Verfahrens wenigstens die erste Sensoreinrichtung, die verteilten Sensoreinrichtungen, die Cloudcomputereinrichtung und die Steuereinrichtung auf.

Weiter bevorzugt weist das Steuersystem zudem zum Ausführen des Verfahrens eine Anzeige zum Anzeigen verifizierter Warnsignale, eine Anzeige zum Anzeigen verifizierter Vorschläge für optimierte Betriebsparameter, ein Konzentrationsmodul zum Empfangen der erfassten Sensorsignale als Rohdaten und zum Aufbereiten der Rohdaten als Clouddaten, und/oder eine Benutzerschnittstelle zum Empfangen von Nutzereingaben, die in der der Steuereinrichtung berücksichtigt werden, auf.

Gemäß einem weiteren Aspekt der Erfindung wird ein Computerprogrammprodukt vorgeschlagen, umfassend Befehle, die bei der Ausführung des Computerprogrammprodukts durch einen Computer diesen veranlassen, die Schritte des Verfahrens nach einer der vorstehenden Ausführungsformen auszuführen.

Gemäß einem weiteren Aspekt der Erfindung wird ein computerlesbares Speichermedium vorgeschlagen, umfassend Befehle, die bei der Ausführung durch einen Computer diesen veranlassen, die Schritte des Verfahrens nach einer der vorstehenden Ausführungsformen auszuführen.

Gemäß einem weiteren Aspekt der Erfindung wird ein computerlesbarer Datenträger vorgeschlagen, auf dem das Computerprogrammprodukt nach einer der vorstehenden Ausführungsformen gespeichert ist.

Gemäß einem weiteren Aspekt der Erfindung wird ein Datenträgersignal vorgeschlagen, das das Computerprogrammprodukt nach einer der vorstehenden Ausführungsformen überträgt.

Vorzugsweise wird vorgeschlagen, mehrere Kameras einzusetzen, die zwei Bereiche in der landwirtschaftlichen Anlage überwachen und zwischen denen sich das Klein- und/oder Mittelvieh bewegen kann.

Vorzugsweise wird ein Überschneidungsbereich der Kameras so gewählt, dass eine Objekterkennung des Klein- und/oder Mittelvieh im Bereich des Überschneidungsbereiches interpretierbar ist. Dies wird vorzugsweise dadurch realisiert, dass beide Kameras das Vieh im Übergangsbereich erkennen können und dann eine übergeordnete Systematik doppelt erkanntes Vieh ausschneidet und/oder dadurch realisiert, dass erst in einem übergeordneten System aus den Ergebnissen der Kameras mittels eines vereinheitlichten Abstraktionslayers über eine Szene eine Objekterkennung durchgeführt wird. So kann auch halb sichtbares Vieh in einer Gesamtinterpretation berücksichtigt werden. Damit wird die Präzision der Datengrundlage erhöht.

Vorzugsweise wird vorgeschlagen, dass aus mehreren Sensorsignalen mittels übergeordneter Interpretationsmechanismen ein erstes Sensorsignal erzeugt wird.

Vorzugsweise werden mehrerer Kameras als Sensoreinrichtungen eingesetzt, insbesondere 3D-Kameras.

Besonders bevorzugt weisen die Kameras aneinander angrenzenden Viewports auf, d.h. aneinander angrenzende Aufnahmebereiche.

In einer besonders bevorzugten Ausführungsform werden Kamerasignale von mehreren Kameras berücksichtigt, um eine situative Bewertung bereitzustellen.

Vorzugsweise wird eine hochauflösende Kamera als erste Sensoreinrichtung und/oder weitere Sensoreinrichtung vorgeschlagen. Da es vorkommen kann, dass sich das Vieh nicht gleichverteilt, wird vorgeschlagen, mehrere Kameras mit Hochauflösung einzusetzen. So wird mittels eines Algorithmus und mittels mehrerer Kameras mit höherer Auflösung pro möglichem Objekt eine Interpretation pro Viewport realisiert und dann die Viewportübergänge derart abgeglichen, dass über eine ganze Szene die Anzahl des Viehs und deren Position ermittelt wird. Durch die Verwendung mehrerer hochauflösender Kameras wird eine höhere Zuverlässigkeit durch den Kameraverbund bereitgestellt.

Vorzugsweise werden die ersten Sensorsignale und zumindest einzelne darauf basierenden Aktionen als Clouddaten gespeichert. Zudem wird bevorzugt vorgeschlagen, dass die Cloudeinrichtung dazu eingerichtet ist, eine Datenentwicklung festzustellen, d.h. Trends zu erkennen bzw. festzustellen. Bei der Feststellung einer Abweichung oder eines Trends kann die Cloudeinrichtung entsprechend reagieren und es können Gegenmaßnahmen eingeleitet werden. Dabei können in der Steuereinrichtung unterschiedliche Gewichtungen einer Gefährdung konfiguriert bzw. parametrisiert werden. So kann dies in Bezug auf Gewichtszuwachs, Tierwohl, Vorschriften, Betriebsbedingungen usw. optimiert werden. Je nach Gefährdungsmaß können unterschiedliche Maßnahmen ergriffen werden, beispielsweise interne Aufzeichnung (Logging) erfolgen, Vorschläge zur Änderung an den Farmer bereitgestellt werden, automatische Maßnahmen nach Freigabe durch den Farmer eingeleitet werden oder automatische Maßnahmen ohne Rückfrage eingeleitet werden.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden:
- Fig. 1: zeigt schematisch ein Steuersystem zum Steuern einer landwirtschaftlichen Anlage zur Kleinvieh- und/oder Mittelviehhaltung in einer erfindungsgemäßen Ausführungsform.
- Fig. 2: zeigt schematisch ein Ablaufdiagramm des erfindungsgemäßen Verfahrens zum Steuern einer landwirtschaftlichen Anlage zur Kleinvieh- und/oder Mittelviehhaltung.
- Fig. 3: zeigt schematisch ein erstes Ausführungsbeispiel des vorgeschlagenen Steuerverfahrens oder Steuersystems.
- Fig. 4: zeigt schematisch ein zweites Ausführungsbeispiel des vorgeschlagenen Steuerverfahrens oder Steuersystems.

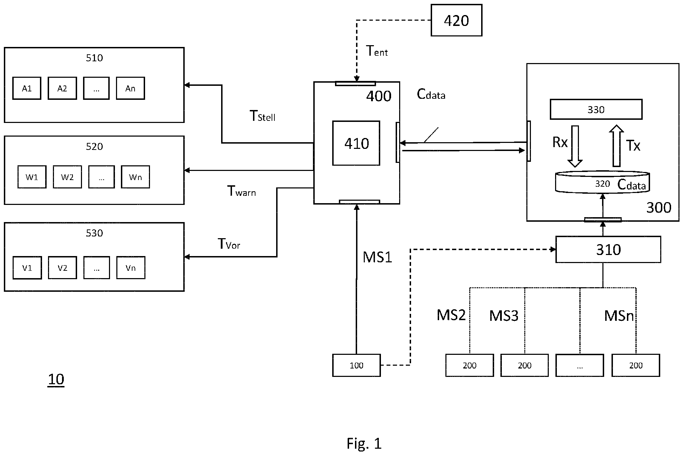

Die Figur 1 zeigt schematisch ein Steuersystem 10 zum Steuern einer landwirtschaftlichen Anlage zur Kleinvieh- und/oder Mittelviehhaltung.

Das Steuersystem 10 umfasst eine erste Sensoreinrichtung 100 zum Erfassen wenigstens eines ersten Sensorsignals MS1, wobei die erste Sensoreinrichtung 100 Teil der landwirtschaftlichen Anlage ist und zum Erfassen einer Prozessgröße und/oder Zustandsgröße der landwirtschaftlichen Anlage eingerichtet ist.

Das Steuersystem 10 umfasst zudem eine Vielzahl örtlich in der landwirtschaftlichen Anlage verteilter Sensoren 200 zum Erfassen einer Vielzahl von weiteren Sensorsignalen MS2 bis MSn und/oder eine Vielzahl von örtlich in einer anderen landwirtschaftlichen Anlage verteilter Sensoren 200 zum Erfassen einer Vielzahl von weiteren Sensorsignalen MS2 bis MSn, wobei die verteilten Sensoreinrichtungen 200 zum Erfassen von Prozessgrößen und/oder Zustandsgrößen der landwirtschaftlichen Anlage eingerichtet sind.

Das Steuersystem 10 umfasst zudem eine Cloudcomputereinrichtung 300 zum Speichern der erfassten Sensorsignale MS2 bis MSn als Clouddaten Cdata. Die Speicherung des ersten Sensorsignales MS1 ist optional.

Das Steuersystem 10 umfasst zudem eine Steuereinrichtung 400 zur Steuerung der landwirtschaftlichen Anlage, wobei die Steuereinrichtung 400 ein Auswertungsmodul 410 zum Auswerten des ersten Sensorsignals MS1 aufweist, wobei das Auswerten ein Berücksichtigen wenigstens eines Teils der gespeicherten Clouddaten Cdata umfasst, um das erste Sensorsignal MS1 in Abhängigkeit von den gespeicherten Clouddaten CData mit dem Auswertungsmodul 410 zu verifizieren.

Die Figur 1 veranschaulicht zudem, dass die Steuereinrichtung 400 eingerichtet ist zum Erzeugen eines oder mehrere verifizierter Steuersignale TStell zum Ansteuern wenigstens eines Stellmittels A1 bis An der landwirtschaftlichen Anlage, wobei das verifizierte Steuersignal ein Steuersignal ist.

Die Figur 1 veranschaulicht zudem, dass die Steuereinrichtung 400 eingerichtet ist zum Erzeugen eines oder mehrerer verifizierter Warnsignale Twarn zum Anzeigen einer Warnung und/oder zum Anzeigen einer Störung der landwirtschaftlichen Anlage. Die Warnungen und/oder Störungen können mit Signalisierungsmitteln oder Anzeigemitteln W1 bis Wn signalisiert werden.

Die Figur 1 veranschaulicht zudem, dass die Steuereinrichtung 400 eingerichtet ist zum Erzeugen eines oder mehrerer verifizierter Vorschläge Tvor für optimierte Betriebsparameter oder für Betriebseinstellungen der landwirtschaftlichen Anlage. Die Vorschläge können an oder mit Anzeigemitteln V1 bis Vn angezeigt werden.

Zudem ist in der Figur 1 ein Empfangen der erfassten Sensorsignale als Rohdaten mit einem Konzentrationsmodul 310 veranschaulicht, und ein Aufbereiten der Rohdaten mit dem Konzentrationsmodul 310 und ein Speichern der aufbereiteten Rohdaten als Clouddaten in der Cloudeinrichtung 300.

Zudem ist in der Figur 1 ein Bereitstellen einer Benutzerschnittstelle 420 zum Empfangen von Entscheidungssignalen Tent und zur Berücksichtigung in dem Entscheidungsmodul 410 veranschaulicht.

Zudem ist in der Figur 1 die Funktionsweise der Cloudcomputereinrichtung dargestellt. Diese umfasst ein Cloudmodul 330, das auch als Cloudanwendung aufgefasst werden kann. Diese Anwendung ist über eine Schnittstelle mit einem Clouddatenbanksystem 320 verbunden. Die Cloudanwendung stellt eine Datenbankanfrage Rx an die Clouddatenbanksystem 320. Diese Antwortet mit der Bereitstellung Tx der angefragten Clouddaten.

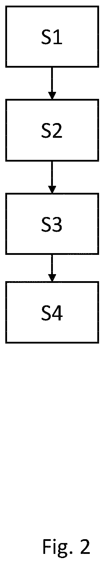

Die Figur 2 zeigt schematisch ein Ablaufdiagramm eines Verfahrens zum Steuern einer landwirtschaftlichen Anlage zur Kleinvieh- und/oder Mittelviehhaltung.

Das Verfahren umfasst den Schritt S1: Erfassen wenigstens eines ersten Sensorsignals einer ersten Sensoreinrichtung der landwirtschaftlichen Anlage, wobei die erste Sensoreinrichtung zum Erfassen einer Prozessgröße und/oder Zustandsgröße in der landwirtschaftlichen Anlage eingerichtet ist. Das erste Sensorsignal ist zum Beispiel das Sensorsignal MS1 der Sensoreinrichtung 100, wie in der Figur 1 gezeigt. Die Sensoreinrichtung 100 ist also beispielsweise ein Kamerasystem und das erste Sensorsignal MS1 ist ein Bildsignal, dass den aktuellen optischen Zustand der landwirtschaftlichen Anlage in dem mit der Kamera aufgezeichneten Bildbereich als Zustandsgröße beschreibt.

Das Verfahren umfasst zudem den Schritt S2: Erfassen einer Vielzahl von weiteren Sensorsignalen von örtlich in der landwirtschaftlichen Anlage und/oder von örtlich in einer anderen landwirtschaftlichen Anlage verteilten Sensoreinrichtungen, wobei die verteilten Sensoreinrichtungen zum Erfassen von Prozessgrößen und/oder Zustandsgrößen in der landwirtschaftlichen Anlage eingerichtet sind. Die Vielzahl der weiteren Sensorsignale sind zum Beispiel die Sensorsignale MS2 bis MSn der Sensoreinrichtungen 200, wie in der Figur 1 gezeigt. Die Sensoreinrichtungen 200 sind beispielsweise Sensoren zum Überwachen eines Stallklimas in der landwirtschaftlichen Anlage, wie Temperatursensoren, Geräuschsensoren, Lichtsensoren oder dergleichen. Die verteilten Sensoren 200 kennzeichnen den aktuellen Zustand der Temperatur, des Geräuschpegels und des Lichts in der landwirtschaftlichen Anlage als Zustandsgrößen.

Das Verfahren umfasst zudem den Schritt S3: Speichern der erfassten Sensorsignale als Clouddaten in einer Cloudcomputereinrichtung. Die Cloudcomputereinrichtung ist beispielsweise ausgebildet wie in der Figur 1 gezeigt mit einem Cloudmodul 330 bzw. einer Cloudanwendung und einem Clouddatenbanksystem 320. Es ist vorgesehen, dass wenigstens die erfassten weiteren Sensorsignale der verteilten Sensoren 200 in der Cloud gespeichert werden, es kann zusätzlich aber auch das erste Sensorsignal in der Cloudcomputereinrichtung gespeichert werden.

Das Verfahren umfasst zudem den Schritt S4: Auswerten des ersten Sensorsignals mit einem Auswertungsmodul, wobei das Auswertungsmodul Teil einer Steuereinrichtung der landwirtschaftlichen Anlage ist und wobei das Auswerten ein Berücksichtigen wenigstens eines Teils der gespeicherten Clouddaten umfasst, um das erste Sensorsignal in Abhängigkeit von den gespeicherten Clouddaten zu verifizieren. Das Auswertungsmodul ist beispielsweise Teil einer Steuereinrichtung, wie in der Figur 1 gezeigt.

Das in der Figur 2 gezeigte Verfahren umfasst weitere bevorzugte Schritte, die nicht in der Figur 2 dargestellt sind. Die bevorzugten Schritte sind vorstehend beschrieben.

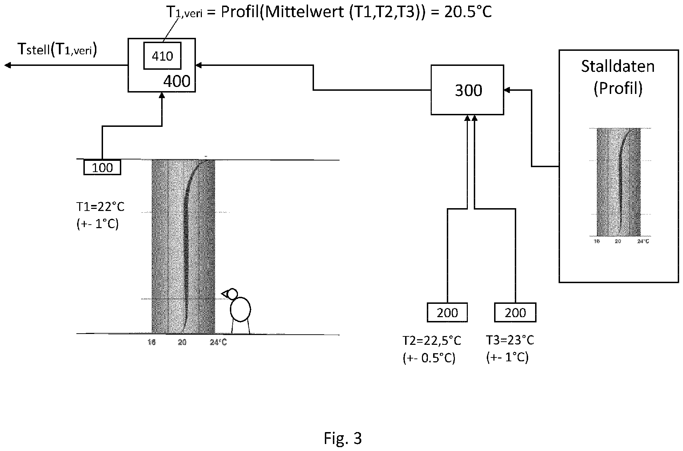

Figur 3 zeigt ein erstes Ausführungsbeispiel, bei dem das erste Sensorsignal durch Fremddaten aus einer spezifischen Cloud in seiner Qualität verbessert wird.

Dadurch, dass die Werte vieler Sensoren in einem übergeordneten System gespeichert werden, d.h. in der Cloud, stehen diese sowohl für eine lokale Analyse mittels Datenvorratshaltung auf einem lokalen System als auch im Onlinebetrieb direkt zur Verfügung.

In der Figur 3 ist gezeigt, dass ein Temperatursensor T1 mit einer Genauigkeit von +/- 1 Grad Celsius eine Raumtemperatur T1 misst, z.B. 22°C. Das heißt, die in der Steuereinrichtung 400 verwendete Temperatur T1 wäre normalerweise höchstens ein Grad genau. Zusätzlich besteht in fast jedem Raum eine höhenabhängige Temperaturschichtung, die als Temperaturdaten oder als Temperaturprofil als Clouddaten gespeichert sein können.

Die Genauigkeit von T1 reicht nicht im Precision Farming aus, um die beschriebenen optimierten Produktionsmechanismen zu steuern oder zu regeln, da die vom Sensor gelieferte Temperatur um 2-3 Grad von der für die Aufzucht optimalen Temperatur abweicht. Es wird nun vorgeschlagen, den Temperatursensor T1 mit Zusatzdaten aus der Cloudeinrichtung 300 zu verbessern bzw. zu verifizieren. Dazu werden in der Figur 3 weitere Daten der Sensoren 200 sowie Stalldaten berücksichtigt. Durch die Berücksichtigung der Zusatzdaten aus der Cloud kann zum Beispiel festgestellt werden, dass der Temperaturwert T1 = 22°C nicht korrekt ist und ein neuer verifizierter Wert T1 ,veri bestimmt werden, der genauer dem wahren Wert entspricht. Dieser neue Wert kann dann in der Steuereinrichtung 400 zur Erzeugung eines Steuersignal Tstell verwendet werden. Um den neuen verifizierten Wert T1,veri zu erzeugen, ist in dem Auswertungsmodul ein Algorithmus hinterlegt. Ein Beispiel für einen Algorithmus wäre, zuerst einen Mittelwert aus den drei Temperatursensoren 100 bis 200 zu berechnen, und anschließend den Mittelwert auf ein Profil bzw. auf eine Look-Up-Tabelle und auf die Höhe eines Huhnes zu mappen. So kann ein neuer Wert T1,veri erzeugt werden und die exaktere Temperatur, die direkt an den Hühner vorliegt, bestimmt werden. Der erzeugte Regeleingriff ist damit genauer und die Gesamteffizienz der Anlage steigt.

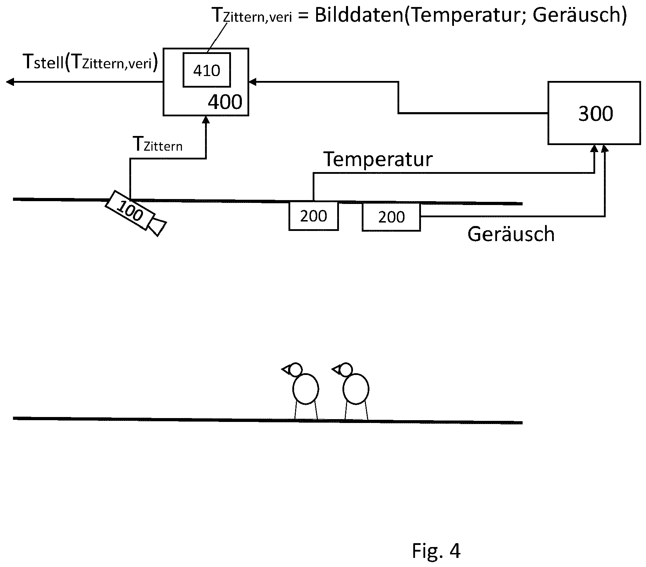

Figur 4 zeigt ein zweites Ausführungsbeispiel, bei dem das erste Sensorsignal durch Fremddaten aus einer spezifischen Cloud in Ihrer Qualität verbessert wird.

Die Figur 4 zeigt, dass die Aussage einer Bildinterpretation isoliert betrachtet zu wenig sicher sein kann, um Aktionen davon abzuleiten, welche sich negativ auf das Tierwohl (bis z.B. zu deren Tod wegen Hyper- oder Hypothermie) oder den Gewichtszuwachs auswirken können. Dementsprechend können zur Bestätigung einer Kamerainterpretation auch andere Sensorwerte des Stalles (zum Beispiel Mittelwert der Temperatursensoren im Stall) berücksichtigt werden, welche zusammen eine stärkere Aussagekraft bilden, als das reine Kamerabild selbst. In der Figur 4 ist dies gezeigt durch eine als Kamera ausgebildete erste Sensoreinrichtung 100 und die Temperartursensoren 200. Zudem ist ein akustischer Sensor 200 vorgesehen, der Störgeräusche überwacht.

Die Steuereinrichtung 400 ist mit dem Auswertungsmodul 410 dazu eingerichtet, das Bildsignal Tzittern mittels Clouddaten zu verglichen und zu verifizieren. Beispielsweise wird auf dem Kamerabild automatisiert erkannt, dass die überwachten Hühner zittern, die schematisch in der Figur 4 dargestellt sind. Anhand der zusätzlichen Auswertung anhand der Clouddaten, die Temperaturdaten und Geräuschdaten umfassen, kann das Bildsignal Tzittern verifiziert werden und z.B. verifiziert werden, dass ein Kältezittern vorliegt, wenn eine niedrige Temperatur vorliegt und keine lauten Geräusche detektiert wurden.

### Bezugszeichenliste

- 100: Erste Sensoreinrichtung
- 200: verteilte Sensoreinrichtungen
- 300: Cloudcomputereinrichtung
- 310: Konzentrationsmodul
- 320: Datenbanksystem
- 330: Cloudmodul/-anwendung
- 400: Steuereinrichtung
- 410: Auswertungsmodul/-anwendung
- 420: Benutzerschnittstelle
- 510: Stelleinrichtung (Aktuatoren)
- 520: Warneinrichtung (Anzeigen/Signalisierung)
- 530: Vorschlageinrichtung (Expertensystem)

## Patentansprüche

1. Verfahren zum Steuern einer landwirtschaftlichen Anlage zur Kleinvieh- und/oder Mittelviehhaltung, insbesondere zur Hühnerhaltung und/oder Schweinehaltung, umfassend die Schritte:
- Erfassen wenigstens eines ersten Sensorsignals einer ersten Sensoreinrichtung (100) der landwirtschaftlichen Anlage, wobei die erste Sensoreinrichtung zum Erfassen einer Prozessgröße und/oder Zustandsgröße in der landwirtschaftlichen Anlage eingerichtet ist;
- Erfassen einer Vielzahl von weiteren Sensorsignalen von örtlich in der landwirtschaftlichen Anlage und/oder von örtlich in einer anderen landwirtschaftlichen Anlage verteilten Sensoreinrichtungen (200), wobei die verteilten Sensoreinrichtungen zum Erfassen von Prozessgrößen und/oder Zustandsgrößen in der landwirtschaftlichen Anlage eingerichtet sind;
- Speichern der erfassten Sensorsignale als Clouddaten in einer Cloudcomputereinrichtung (300);
- Auswerten des ersten Sensorsignals mit einem Auswertungsmodul (410), wobei das Auswertungsmodul Teil einer Steuereinrichtung (400) der landwirtschaftlichen Anlage und/oder Teil einer Cloudcomputereinrichtung ist und wobei das Auswerten ein Berücksichtigen wenigstens eines Teils der gespeicherten Clouddaten umfasst, um das erste Sensorsignal in Abhängigkeit von den gespeicherten Clouddaten zu verifizieren.

2. Verfahren nach Anspruch 1, wobei das Verfahren den zusätzlichen Schritt umfasst:
- Erzeugen eines oder mehrere verifizierter Steuersignale (Tstell) zum Ansteuern wenigstens eines Stellmittels der landwirtschaftlichen Anlage, wobei das verifizierte Steuersignal ein Steuersignal ist, das auf Basis der kombinierten Auswertung des ersten Sensorsignals und der Clouddaten erzeugt wird, und
vorzugsweise sind die Steuersignale Teil einer Regelung der landwirtschaftlichen Anlage, und
weiter vorzugsweise sind die Steuersignale priorisiert ausgebildet und weisen unterschiedlich konfigurierbare Prioritäten auf.

3. Verfahren nach Anspruch 1 oder 2, wobei das Verfahren den zusätzlichen Schritt umfasst:
- Erzeugen eines oder mehrerer verifizierter Warnsignale (Twarn) zum Anzeigen einer Warnung und/oder zum Anzeigen einer Störung der landwirtschaftlichen Anlage, wobei das verifizierte Warnsignal ein Warnsignal ist, das auf Basis der kombinierten Auswertung des ersten Sensorsignals und der Clouddaten erzeugt wird.

4. Verfahren nach einem der vorstehenden Ansprüche, wobei das Verfahren den zusätzlichen Schritt umfasst:
- Erzeugen eines oder mehrerer verifizierter Vorschläge (Tvor) für optimierte Betriebsparameter oder Betriebseinstellungen der landwirtschaftlichen Anlage, wobei der verifizierte Vorschlag ein Vorschlag ist, der auf Basis der kombinierten Auswertung des ersten Sensorsignals und der Clouddaten erzeugt wird; und/oder
- Ausführen wenigstens einer Maßnahme aus der Liste von Maßnahmen aufweisend, nach Detektion einer Abweichung zwischen dem ersten Sensorsignal und den gespeicherten Clouddaten:
- Bereitstellen eines Auszugs des ersten Sensorsignals und aufgezeichneter Clouddaten,
- Anzeigen eines Veränderungsvorschlags für Betriebsparameter oder für Betriebseinstellungen der landwirtschaftlichen Anlage,
- Anzeigen eines Vorschlags für eine Ansteuerung eines Stellmittels der landwirtschaftlichen Anlage,
und wobei insbesondere eine Maßnahme der vorgenannten Maßnahmen in Abhängigkeit eines bestimmten Maßes der detektierten Abweichung ausgeführt wird.

5. Verfahren nach einem der vorstehenden Ansprüche, wobei vor dem Speichern der Clouddaten (Cdata) in der Cloudcomputereinrichtung (300) und/oder der landwirtschaftlichen Anlage wenigstens einer der nachfolgenden Schritte erfolgt:
- Empfangen der erfassten Sensorsignale als Rohdaten mit einem Konzentrationsmodul,
- Aufbereiten der Rohdaten mit dem Konzentrationsmodul und Speichern der aufbereiteten Rohdaten als Clouddaten,
wobei vorzugsweise das Aufbereiten der Rohdaten ein anonymisieren der Clouddaten, ein Komprimieren, ein Verschlüsseln und/oder ein Kategorisieren der Rohdaten umfasst.

6. Verfahren nach einem der vorstehenden Ansprüche, wobei die erfasste Prozessgröße und/oder Zustandsgröße der ersten Sensoreinrichtung (100) und/oder die erfassten Prozess- und/oder Zustandsgrößen der verteilten Sensoreinrichtungen (200) Größen zur Kennzeichnung eines Stallklimas in der landwirtschaftlichen Anlage sind,
vorzugsweise sind die Prozess- und/oder Zustandsgrößen Größen aus der Liste aufweisend:
- eine Prozess- und/oder Zustandsgröße zur Kennzeichnung einer Schadgaskonzentration (CO, CO2, H2S, NH3),
- eine Prozess- und/oder Zustandsgröße zur Kennzeichnung einer Helligkeit (insbesondere deren Wert im Tagesgang),
- eine Prozess- und/oder Zustandsgröße zur Kennzeichnung einer Lichtzusammensetzung,
- eine Prozess- und/oder Zustandsgröße zur Kennzeichnung einer Frischluftmenge,
- eine Prozess- und/oder Zustandsgröße zur Kennzeichnung einer Luftbewegung,
- eine Prozess- und/oder Zustandsgröße zur Kennzeichnung einer Staubkonzentration,
- eine Prozess- und/oder Zustandsgröße zur Kennzeichnung einer Temperatur, und
- eine Prozess- und/oder Zustandsgröße zur Kennzeichnung einer Feuchtigkeit,
- eine Prozess- und/oder Zustandsgröße zur Kennzeichnung eines Geräuschpegels, und
weiter bevorzugt werden die Größen zur Kennzeichnung des Stallklimas mit wenigstens einem Stallklimasensor erfasst, insbesondere ist ein Stallklimasensor ein Gassensor, ein Lichtsensor, ein Durchflusssensor, ein Staubsensor, ein Temperatursensor und/oder ein Feuchtigkeitssensor oder dergleichen.

7. Verfahren nach einem der vorstehenden Ansprüche, wobei die erfasste Prozessgröße und/oder Zustandsgröße der ersten Sensoreinrichtung (100) und/oder die erfassten Prozess- und/oder Zustandsgrößen der verteilten Sensoreinrichtungen (200) Größen zur Kennzeichnung eines physiologischen und/oder ethologischen Mechanismus eines Nutztierverhaltens in der landwirtschaftlichen Anlage sind,
vorzugsweise sind die Prozess- und/oder Zustandsgröße Größen aus der Liste aufweisend:
- eine Prozess- und/oder Zustandsgrößen zur Kennzeichnung eines Suhlens der Nutztiere,
- eine Prozess- und/oder Zustandsgrößen zur Kennzeichnung einer Haufenlagerung der Nutztiere,
- eine Prozess- und/oder Zustandsgrößen zur Kennzeichnung einer Schattenlagerung der Nutztiere,
- eine Prozess- und/oder Zustandsgrößen zur Kennzeichnung eines Kältezitterns der Nutztiere,
- eine Prozess- und/oder Zustandsgrößen zur Kennzeichnung eines Hechelns der Nutztiere,
eine Prozess- und/oder Zustandsgrößen zur Kennzeichnung der Menge der Futteraufnahme der Nutztiere, und
weiter bevorzugt werden die Größen zur Kennzeichnung eines physiologischen und/oder ethologischen Mechanismus eines Nutztierverhaltens in der landwirtschaftlichen Anlage mit einem Kamerasystem erfasst, das mit einem Bilderkennungsalgorithmus dazu eingerichtet ist, einen physiologischen und/oder den ethologischen Mechanismus im Nutztierverhalten zu erkennen, und insbesondere dazu ein Bewegungsprofil der einzelnen Nutztiere aufzeichnet und auswertet.

8. Verfahren nach einem der vorstehenden Ansprüche, wobei das Verfahren die zusätzlichen Schritte umfasst:
- Verwenden eines Kamerasystems als erste Sensoreinrichtung (100), das mit einem Bilderkennungsalgorithmus dazu eingerichtet ist, einen physiologischen und/oder den ethologischen Mechanismus im Nutztierverhalten zu erkennen und
- Verwenden von Stallklimasensoren als verteilte Sensoreinrichtungen (200) zum Erfassen von Größen zur Kennzeichnung eines Stallklimas in der landwirtschaftlichen Anlage, und
- Auswerten des als Kamerasignal vorliegenden ersten Sensorsignals der ersten Sensoreinrichtung mit dem Auswertungsmodul (410), wobei das Auswerten ein Berücksichtigen wenigstens eines Teils der gespeicherten Clouddaten umfasst, um den mit dem Kamerasystem erfassten physiologischen und/oder den ethologischen Mechanismus im Nutztierverhalten in Abhängigkeit von den als Clouddaten gespeicherten Größen zur Kennzeichnung des Stallklimas in der landwirtschaftlichen Anlage zu verifizieren.

9. Verfahren nach einem der vorstehenden Ansprüche, wobei der Schritt Auswerten des ersten Sensorsignals mit einem Auswertungsmodul den zusätzlichen Schritt umfasst:
- Verwenden eines maschinellen Lernalgorithmus zur Auswertung des ersten Sensorsignals und der gespeicherten Clouddaten, um das erste Sensorsignal in Abhängigkeit von den gespeicherten Clouddaten mit dem maschinellen Auswertungsalgorithmus zu verifizieren,
- vorzugsweise ist der maschinelle Lernalgorithmus ein trainiertes künstliches neuronales Netz zum Verifizieren des ersten Sensorsignals und der gespeicherten Clouddaten, um das erste Sensorsignal in Abhängigkeit von den gespeicherten Clouddaten mit dem trainieren neuronalen Netz zu verifizieren,
- weiter vorzugsweise wird ein cloudbasierter maschineller Lernalgorithmus verwendet, der in der Cloudcomputereinrichtung (300) eingerichtet ist.

10. Verfahren nach einem der vorstehenden Ansprüche, wobei das Verfahren den zusätzlichen Schritt umfasst:
- Bereitstellen einer Benutzerschnittstelle zum Empfangen von Entscheidungssignalen (Tent) und zur Berücksichtigung in dem Entscheidungsmodul, insbesondere nach Erzeugen eines verifizierten Warnsignals und/oder nach Erzeugen eines verifizierten Vorschlags für optimierte Betriebsparametern zu empfangen, wobei
vorzugsweise auf Basis des Entscheidungssignals ein verifiziertes Steuersignal zum Ansteuern wenigstens eines Stellmittels der landwirtschaftlichen Anlage erzeugt wird; und/oder
vorzugsweise auf Basis des Entscheidungssignals ein Anpassen eines maschinellen Lernalgorithmus und/oder eines Big-Data-Algorithmus und/oder eines Cloud-Computing-Algorithmus erfolgt, wobei der Algorithmus oder die Algorithmen dazu eingerichtet sind, das erste Sensorsignal zu verifizieren.

11. Verfahren nach einem der vorstehenden Ansprüche, wobei der Schritt Auswerten des ersten Sensorsignals mit einem Auswertungsmodul den zusätzlichen Schritt umfasst:
- Bewerten des ersten Sensorsignals in Abhängigkeit der gespeicherten Clouddaten bezüglich ihrer Steuerungswirksamkeit, und Bestimmen eines Wirksamkeitswertes als Maß für die Steuerungswirksamkeit des ersten Sensorsignals, und/oder
- Bewerten des ersten Sensorsignals in Abhängigkeit der gespeicherten Clouddaten bezüglich der korrekten Funktionsfähigkeit der Sensoreinrichtung, und Bestimmen eines Funktionsfähigkeitswertes als Maß für die Funktionsfähigkeit der ersten Sensoreinrichtung; und/oder
- Bewerten des ersten Sensorsignals in Abhängigkeit der gespeicherten Clouddaten bezüglich einer Abweichung des Sensorsignals zu den gespeicherten Clouddaten, und Bestimmen eines Abweichungswertes als Maß für die Abweichung des ersten Sensorsignals zu den Clouddaten;
- Bewerten des ersten Sensorsignals in Abhängigkeit der gespeicherten Clouddaten bezüglich einer Plausibilität des Sensorsignals im Vergleich zu den gespeicherten Clouddaten, und Bestimmen eines Plausibilitätswertes als Maß für die Plausibilität des ersten Sensorsignals zu den Clouddaten; und/oder
- Anzeigen auffälliger Sensordaten nach der Auswertung, um die auffälligen Sensordaten einem Nutzer zur Überprüfung bereitzustellen.

12. Verfahren nach einem der vorstehenden Ansprüche, wobei das Verfahren den zusätzlichen Schritt umfasst:
- Empfangen einer Ausführungsbestätigung, bevorzugt vom Anlagenbetreiber oder einem Operationscenter, wobei vorzugsweise;
- nach Ablauf einer vorbestimmten Zeitdauer ein Steuersignal zum Ansteuern wenigstens eines Stellmittels der landwirtschaftlichen Anlage erzeugt wird, wenn keine Ausführungsbestätigung mit der Steuereinrichtung empfangen wird, und weiter vorzugsweise
- sind Ablaufpläne in der Steuereinrichtung hinterlegt zum Erzeugen eines Steuersignals zum Ansteuern wenigstens eines Stellmittels der landwirtschaftlichen Anlage, wobei die Ablaufpläne insbesondere für Ausführungsbestätigungen zeitlich und/oder situationsabhängig unterschiedlich sind, und/oder
wobei das Verfahren den zusätzlichen Schritt umfasst:
- Erzeugen eines Steuersignals zum Ansteuern wenigstens eines Stellmittels der landwirtschaftlichen Anlage, wenn innerhalb einer vorbestimmten Zeitdauer ein veränderter Sensorwert vorliegt, und/oder
wobei das Verfahren den zusätzlichen Schritt umfasst:
- Anzeigen eingeleiteter Steuermaßnahmen, vorzugsweise mit Zusatzinformationen, wobei eine Steuermaßnahme durch Ansteuerung mittels eines Steuersignals zum Ansteuern wenigstens eines Stellmittels der landwirtschaftlichen Anlage eingeleitet wird, und/oder das Verfahren den zusätzlichen Schritt umfasst:
- Einstellen einer Wirkung der Clouddaten, bevorzugt für eine nachfolgende Auswertung auf Basis weiterer Clouddaten.

13. Verfahren nach einem der vorstehenden Ansprüche, wobei der Schritt Speichern der erfassten Sensorsignale als Clouddaten in der Cloudcomputereinrichtung (300) den zusätzlichen Schritt umfasst:
- Speichern von Clouddaten anderer landwirtschaftlichen Anlagen, die in Bezug auf die zu steuernde landwirtschaftliche Anlage einen klimaähnlichen Standort aufweisen, insbesondere ist ähnlicher klimatischer Standort ein Standort der nicht weniger als 100 km entfernt ist, und/oder dessen Breitengraden nicht mehr als +/- 10 Breitengrad vom Standort der zu steuernden Anlage abweichen und/oder dessen Höhe über Meer um weniger als 300m von der der zu steuernden Anlage abweicht und/oder der aus dem demselben Bezirk oder Land stammt, und/oder
wobei der Schritt Speichern der erfassten Sensorsignale als Clouddaten in der Cloudcomputereinrichtung (300) häufiger als alle 120 Minuten ausgeführt wird, bevorzugt häufiger als alle 30 Minuten ausgeführt wird, besonders bevorzugt häufiger als alle 10 Minuten ausgeführt wird.

14. Verfahren nach einem der vorstehenden Ansprüche, wobei
- eine Vielzahl von Sensoreinrichtungen in dem Verfahren berücksichtigt werden, insbesondere werden mehr als 100 Sensoreinrichtungen in dem Verfahren berücksichtigt, und/oder
- eine Vielzahl von Sensoreinrichtungen anderer landwirtschaftlicher Anlagen in dem Verfahren berücksichtigt werden, insbesondere werden mehr als 100 Sensoreinrichtungen anderer landwirtschaftlicher Anlagen in dem Verfahren berücksichtigt.

15. Verfahren nach einem der vorstehenden Ansprüche, wobei das Verfahren den zusätzlichen Schritt umfasst:
- Bestimmen eines Maßes für eine Abweichung und/oder für eine Vertrauenswürdigkeit des erstens Sensorsignals in Abhängigkeit der gespeicherten Clouddaten und vorzugsweise umfasst das Verfahren wenigstens einen der nachfolgenden Schritte:
- Erzeugen eines oder mehrere verifizierter Steuersignale und/oder verifizierter Warnsignale und/oder verifizierter Vorschläge, wobei das verifizierte Steuersignal und/oder das verifizierte Warnsignal und/oder der verifizierte Vorschlag je nach Maß der Abweichung und/oder der Vertrauenswürdigkeit erzeugt wird; und/oder
- Anpassen oder Verändern des ersten Sensorsignals je nach Maß der Abweichung und/oder der Vertrauenswürdigkeit, und/oder
- Verändern oder Anpassen des ersten Sensorsignals in Abhängigkeit der Clouddaten nach der Verifizierung, so dass das erste Sensorsignal nach dem Verändern oder Anpassen weniger stark von den Clouddaten abweicht; und/oder
- Interpolieren mehrerer erster Sensorsignale und/oder mehrerer weiterer Sensorsignale mit einer Interpolationsfunktion, und Verändern oder Anpassen des ersten Sensorsignals in Abhängigkeit der Interpolationsfunktion, um ein interpoliertes erstes Sensorsignal zur Steuerung der landwirtschaftlichen Anlage bereitzustellen.

16. Verfahren nach einem der vorstehenden Ansprüche, wobei die Steuereinrichtung Teil einer Regelung ist bevorzugt eine Regelung mit Optimierung von verschiedenen Sollparametern, besonders bevorzugt, weisen die verschiedenen Sollparameter eine unterschiedliche konfigurierbare Priorität auf, und/oder
wobei der Schritt Auswerten des ersten Sensorsignals mit einem Auswertungsmodul den zusätzlichen Schritt umfasst:
- Auswerten der Clouddaten in einem Onlinebetrieb der Steuereinrichtung, wenn eine ordnungsgemäße Datenverbindung mit der Cloudcomputereinrichtung detektiert wird, und Umschalten in einen Lokalbetrieb der Steuereinrichtung, wenn keine ordnungsgemäße Datenverbindung mit der Cloudcomputereinrichtung detektiert wird.

17. Verfahren nach einem der vorstehenden Ansprüche, wobei das Verfahren den zusätzlichen Schritt umfasst:
- Verarbeiten von lokal in der Steuereinrichtung gespeicherten Daten und/oder gespeicherten Clouddaten mittels einem maschinellen Lernalgorithmus und/oder mittels einem Big-Data-Algorithmus und/oder mittels einem Cloud-Computing-Algorithmus, insbesondere, um das erste Sensorsignal zu verifizieren, und/oder
- Erzeugen eines oder mehrere verifizierter Steuersignale zum Ansteuern wenigstens eines Stellmittels der landwirtschaftlichen Anlage, wobei das verifizierten Steuersignal ein Steuersignal ist, das auf Basis der kombinierten Auswertung des ersten Sensorsignals und der Clouddaten erzeugt wird, erst dann ausgeführt wird, wenn über eine Benutzerschnittstelle ein Freigabesignal empfangen wird.

18. Steuersystem zum Steuern einer landwirtschaftlichen Anlage zur Kleinvieh- und/oder Mittelviehhaltung, umfassend:
- eine erste Sensoreinrichtung (100) zum Erfassen wenigstens eines ersten Sensorsignals, wobei die erste Sensoreinrichtung Teil der landwirtschaftlichen Anlage ist und zum Erfassen einer Prozessgröße und/oder Zustandsgröße der landwirtschaftlichen Anlage eingerichtet ist;
- eine Vielzahl örtlich in der landwirtschaftlichen Anlage verteilter Sensoren (200) zum Erfassen einer Vielzahl von weiteren Sensorsignalen und/oder eine Vielzahl von örtlich in einer anderen landwirtschaftlichen Anlage (2) verteilter Sensoren zum Erfassen einer Vielzahl von weiteren Sensorsignalen, wobei die verteilten Sensoreinrichtungen zum Erfassen von Prozessgrößen und/oder Zustandsgrößen der landwirtschaftlichen Anlage eingerichtet sind;
- eine Cloudcomputereinrichtung (300) zum Speichern der erfassten Sensorsignale als Clouddaten;
- eine Steuereinrichtung (400) zur Steuerung der landwirtschaftlichen Anlage, wobei die Steuereinrichtung (400) ein Auswertungsmodul (410) zum Auswerten des ersten Sensorsignals aufweist, wobei das Auswerten ein Berücksichtigen wenigstens eines Teils der gespeicherten Clouddaten umfasst, um das erste Sensorsignal in Abhängigkeit von den gespeicherten Clouddaten mit dem Auswertungsmodul zu verifizieren.

19. Steuersystem nach Anspruch 18, wobei
die Steuereinrichtung (400) zum Erzeugen eines verifizierten Steuersignals zum Ansteuern wenigstens eines Stellmittels (500) der landwirtschaftlichen Anlage eingerichtet ist, wobei das verifizierte Steuersignal ein Steuersignal ist, das auf Basis der kombinierten Auswertung des ersten Sensorsignals und der Clouddaten erzeugt wird, und/oder
die Steuereinrichtung (400) zum Erzeugen eines verifizierten Warnsignals zum Anzeigen einer Warnung und/oder einer Störung der landwirtschaftlichen Anlage eingerichtet ist, wobei das verifizierte Warnsignal ein Warnsignal ist, das auf Basis der kombinierten Auswertung des ersten Sensorsignals und der Clouddaten erzeugt wird, und/oder
die Steuereinrichtung (400) zum Erzeugen eines verifizierten Vorschlags für optimierte Betriebsparametern der landwirtschaftlichen Anlage eingerichtet ist, wobei der verifizierte Vorschlag ein Vorschlag für optimierte Betriebsparametern ist, der auf Basis der kombinierten Auswertung des ersten Sensorsignals und der Clouddaten erzeugt wird, und/oder
das Steuersystem zum Ausführen des Verfahrens nach Anspruch 1 bis 17 eingerichtet ist, und zum Ausführen des Verfahrens
- wenigstens die erste Sensoreinrichtung (100),
- die verteilten Sensoreinrichtungen (200),
- die Cloudcomputereinrichtung (300) und
- die Steuereinrichtung (400) aufweist, und
vorzugsweise zudem zum Ausführen des Verfahrens
- eine Anzeige (500) zum Anzeigen verifizierter Warnsignale,
- eine Anzeige (500) zum Anzeigen verifizierter Vorschläge für optimierte Betriebsparametern,
- ein Konzentrationsmodul (600) zum Empfangen der erfassten Sensorsignale als Rohdaten und zum Aufbereiten der Rohdaten als Clouddaten, und/oder
- eine Benutzerschnittstelle (700) zum Empfangen von Nutzereingaben, die in der der Steuereinrichtung (400) berücksichtigt werden.

20. Computerprogrammprodukt, umfassend Befehle, die bei der Ausführung des Computerprogrammprodukts durch einen Computer diesen veranlassen, die Schritte des Verfahrens nach einem der Ansprüche 1 bis 17 auszuführen.
